(19) Europäisches Patentamt / European Patent Office / Office européen des brevets

(11) **EP 3 242 490 B1**

(12) **EUROPEAN PATENT SPECIFICATION**

(45) Date of publication and mention
of the grant of the patent:
**16.12.2020 Bulletin 2020/51**

(21) Application number: **15874878.0**

(22) Date of filing: **20.08.2015**

(51) Int Cl.:
*H04N 21/43* (2011.01)   *H04N 21/2362* (2011.01)
*H04N 21/462* (2011.01)   *H04N 21/61* (2011.01)
*H04N 21/63* (2011.01)    *H04N 21/845* (2011.01)
*H04N 21/8547* (2011.01)

(86) International application number:
**PCT/CN2015/087615**

(87) International publication number:
**WO 2016/107192 (07.07.2016 Gazette 2016/27)**

(54) **SELF-ADAPTIVE STREAMING MEDIA PROCESSING METHOD AND DEVICE**

VERARBEITUNGSVERFAHREN UND VORRICHTUNG FÜR SELBSTANPASSENDE
STREAMING-MEDIEN

PROCÉDÉ ET DISPOSITIF DE TRAITEMENT DE CONTENU MULTIMÉDIA DE DIFFUSION EN FLUX
AUTO-ADAPTATIVE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.12.2014 CN 201410856623**

(43) Date of publication of application:
**08.11.2017 Bulletin 2017/45**

(73) Proprietor: **ZTE Corporation
Shenzhen, Guangdong 518057 (CN)**

(72) Inventor: **HUANG, Cheng
Shenzhen
Guangdong 518057 (CN)**

(74) Representative: **Novagraaf Technologies
Bâtiment O2
2, rue Sarah Bernhardt
CS90017
92665 Asnières-sur-Seine Cedex (FR)**

(56) References cited:
WO-A1-2014/171718    CN-A- 101 179 484
CN-A- 101 547 355    CN-A- 103 875 252
US-A1- 2013 291 040    US-A1- 2014 002 598
US-A1- 2014 059 180

• JEAN LE FEUVRE ET AL: "Extensions for Hybrid
Delivery using MPEG-2 TS and DASH", 102.
MPEG MEETING; 15-10-2012 - 19-10-2012;
SHANGHAI; (MOTION PICTURE EXPERT GROUP
OR ISO/IEC JTC1/SC29/WG11),, no. m26903, 17
October 2012 (2012-10-17), XP030055236,
• Youngkwon Lim: "MPEG systems technologies
for advanced media synchronization", , 23
October 2014 (2014-10-23), pages 1-15,
XP055422440, Retrieved from the Internet:
URL:https://mpeg.chiariglione.org/sites/de
fault/files/files/standards/parts/docs/MPE G
systems technologies for advanced media
synchronization.pdf [retrieved on 2017-11-07]
• CHRISTOPHER KOHNEN ET AL: "A DVB/IP
streaming testbed for hybrid digital media
content synchronization", CONSUMER
ELECTRONICS - BERLIN (ICCE-BERLIN), 2012
IEEE INTERNATIONAL CONFERENCE ON, IEEE,
3 September 2012 (2012-09-03), pages 136-140,
XP032256541, DOI:
10.1109/ICCE-BERLIN.2012.6336493 ISBN:
978-1-4673-1546-3
• DVB ORGANIZATION: "29n141652.doc", DVB,
DIGITAL VIDEO BROADCASTING, C/O EBU - 17A
ANCIENNE ROUTE - CH-1218 GRAND
SACONNEX, GENEVA - SWITZERLAND, 23 April
2014 (2014-04-23), XP017843611,

**(Cont. next page)**

- JEAN LE FEUVRE ET AL: "Update on 13818-1 DAM6", 107. MPEG MEETING; 13-1-2014 - 17-1-2014; SAN JOSE; (MOTION PICTURE EXPERT GROUP OR ISO/IEC JTC1/SC29/WG11),, no. m32287, 8 January 2014 (2014-01-08), XP030060739,
- JEAN LE FEUVRE ET AL: "Input on WD2 of 13818-1 AMD8", 106. MPEG MEETING; 28-10-2013 - 1-11-2013; GENEVA; (MOTION PICTURE EXPERT GROUP OR ISO/IEC JTC1/SC29/WG11),, no. m31446, 23 October 2013 (2013-10-23), XP030059898,
- DVB ORGANIZATION: "TM-CCSS0276r1 Spec Clause 11 for MPEG.doc", DVB, DIGITAL VIDEO BROADCASTING, C/O EBU - 17A ANCIENNE ROUTE - CH-1218 GRAND SACONNEX, GENEVA - SWITZERLAND, 24 March 2014 (2014-03-24), XP017843357,
- ZHIJIE ZHAO ET AL: "MPEG-2 TS RAP indexing for DASH", 94. MPEG MEETING; 11-10-2010 - 15-10-2010; GUANGZHOU; (MOTION PICTURE EXPERT GROUP OR ISO/IEC JTC1/SC29/WG11),, no. M18457, 6 October 2010 (2010-10-06), XP030047047,
- JEAN LE FEUVRE ET AL: "On Hybrid Delivery", 103. MPEG MEETING; 21-1-2013 - 25-1-2013; GENEVA; (MOTION PICTURE EXPERT GROUP OR ISO/IEC JTC1/SC29/WG11),, no. m28136, 16 January 2013 (2013-01-16), XP030056689,

**Description**

**Technical Field**

The present invention relates to the field of communications, and in particular to a method and device for processing adaptive streaming.

**Background**

Users access communication services developed and deployed by service providers and content providers through fixed or mobile communication terminals, such as televisions, desktop computers, tablet computers, mobile phones. Each of these accesses is implemented by establishing a communication link between a user terminal and a service server (content server) by means of a customized communication client capability. The communication link is usually established by wired communication networks, such as a X Digital Subscriber Line (xDSL), a Fiber-to-the-x (FTTx), a Cable, and wireless communication networks, such as a wireless fidelity network (Wi-Fi), a second generation mobile communication network (2G), a third generation mobile communication network (3G), a Long Term Evolution (LTE).

Digital Video Broadcasting (DVB) is one of main digital TV standards in the world, a DVB standard provides a complete specification based on a Moving Picture Experts Group 2 (MPEG-2) standard audio and video data compression algorithm and multiplexing technology. The DVB standard is suitable for digital television systems of different media and defines three kinds of channel coding and modulation schemes, including wired (DVB-C), satellite (DVB-S) and terrestrial (DVB-T), which are used for transmitting media data stream. And the DVB standard extends a system layer of a MPEG-2 standard and enriches at least one network interface.

Dynamic Adaptive Streaming over Hyper Text Transport Protocol (DASH) is an adaptive bit rate streaming technology. High quality streaming content is provided by a conventional Hyper Text Transport Protocol Web (HTTP Web) server. The DASH divides a video into multiple file blocks on the HTTP server. Each block includes a video content for a short playing time. These file blocks are a movie (on-demand) for several hours or a portion of a live video content of sporting events. The video is compiled into multiple video segments with multiple bit rates, so as to cover different network bandwidth requirements.

In a communication service development process, terminal capability and network environment continue to rise. And demand of users for service experience is also improved. An Over The Top (OTT), which is representative of adaptive streaming technology, has a flexibility of watching and paying for the video whenever and wherever possible. And traditional broadcasting technologies, such as Internet Protocol Television (IPTV), digital television, satellite television, has a large screen for high definition and quality assurance. Therefore, a fusion of and OTT technology and a broadcasting technology, such as digital television, provides integrated solutions for a variety of scenarios. Typically, a Second Screen application currently has lots of attention. Users pay for personalized media information related with TV screen broadcast programs through "TV buddies" such as smart mobile phones, tablet PCs. Meanwhile, business operators transfer traditional television programs to users through a broadcast network (such as DVB-C digital TV network), and additionally deliver internet on-demand contents with long tail effect to specific user groups by means of a OTT mode of an internet broadband network. This Hybrid Delivery mode saves network investment cost, integrates broadcast and broadband network technology, so as to provide users with content-rich, personalized service experience.

The Hybrid Delivery mode has distinguishing features of content source independent, transmission network heterogeneous, and player terminal differentiation. Whether association in time is established between a broadcast program or a Primary Media content and a broadband program or an Ancillary Media content, that is, whether or not different content sources, different transmission formats, and different media player terminals are ensured to synchronously play, has become a key to whether these applications are accepted by the users.

An audio and video features identification technology and an application of this technology is a direction of research on solving a problem of media contents synchronization playing under a hybrid delivery mode. Digital features of audio and video media contents are considered as a time synchronization reference between different media. The audio and video features identification technology includes: 1) digital watermark technology, which collects digital watermarks of audio signals of television programs, detects time progresses of the programs being played through program channel identifiers and time stamp information of the digital watermarks, so that appropriate ancillary media contents are obtained to synchronized playback with the programs being played; 2) digital fingerprint technology, which extracts digital fingerprint information from audio and video samples and obtains media synchronization information from a fingerprint research database.

However, the digital watermark technology and the digital fingerprint technology belong to computationally intensive technology and depend on a second screen terminal to capture qualities and features of audio and video samples so as to extract algorithm performances. Meanwhile, these technologies are greatly influenced by ambient noises and terminal capabilities and have limitations with appropriate scenarios.

A single reference clock is delivered for broadcast and broadband network media is another direction of research on solving the problem of media contents synchronization playing under the hybrid delivery mode. One method is to contain clock information, such as a program clock reference (PCR) or presence time stamp (PTS), carried in a transport stream, e.g., a MPEG-2TS stream, in at least one internet protocol (IP) packet of a real-time transport protocol (RTP) for transmission. A main disadvantage of this scheme is that PCR clock information of the transport stream is changed when the transport stream is de-multiplexed so that it is impossible to maintain a continuity of a clock. However, the broadband operator cannot know a change of the PCR clock information.

Document JEAN LE FEUVRE ET AL: "Extensions for Hybrid Delivery using MPEG-2 TS and DASH",102. MPEG MEETING; 15-10-2012 - 19-10-2012; SHANGHAI; (MOTION PICTURE EXPERT GROUP OR ISO/IEC JTC1/SC29/WG11),, no. m26903, 17 October 2012 (2012-10-17) discloses an arrangement using PES timeline streaming as a general approach towards the problem of DASH-augmented broadcast. Document WO 2014/171718 A1 (LG ELECTRONICS INC) 23 October 2014 (2014-10-23); & EP 2 988 519 A1 (LG ELECTRONICS INC [KR]) 24 February 2016 (2016-02-24) discloses an hybrid architecture using an MPD_descriptor.

Document Youngkwon Lim: "MPEG systems technologies for advanced media synchronization", 23 October 2014 (2014-10-23), pages 1-15 refers to MPEG systems technologies for advanced media synchronization.

Document CHRISTOPHER KOHNEN ET AL: "A DVB/IP streaming testbed for hybrid digital media content synchronization",CONSUMER ELECTRONICS - BERLIN (ICCE-BERLIN), 2012 IEEE INTERNATIONAL CONFERENCE ON, IEEE, 3 September 2012 (2012-09-03), pages 136-140 discloses an hybrid synchronization solution using a broadcast_timeline_descriptor.

Document DVB ORGANIZATION: "29n141652.doc",DVB, DIGITAL VIDEO BROADCASTING, C/O EBU - 17A ANCIENNE ROUTE - CH-1218 GRAND SACONNEX, GENEVA - SWITZERLAND, 23 April 2014 (2014-04-23) refers to Delivery of Timeline for External Data.

Aim at a problem of the media contents synchronization playing under the hybrid delivery mode in broadcast and the broadband networks, an improved signaling mechanism studies required to be researched.

**Summary**

At least some embodiments of present invention provides a method and device for processing adaptive streaming, so as at least to partially solve a problem in the related art of media contents synchronization playing under a hybrid delivery mode in broadcast and the broadband networks.

One implementation disclosed herein is a method for processing adaptive streaming, as defined in appended claim 1.

In one embodiment, obtaining the time information of the adaptive streaming carried in the transport stream includes: extracting a presence time stamp, PTS, contained in a extension header field of the TEMI PES code stream; determining the time information of the adaptive streaming according to a value of the PTS.

In one embodiment, obtaining the time information of the adaptive streaming carried in the transport stream includes: extracting a PTS from a extension header field of a PES carried in a payload of the specific media component TS code stream; determining the time information of the adaptive streaming according to a value of the PTS.

In one embodiment, obtaining the time information of the adaptive streaming carried in the transport stream includes: obtaining the first TS code stream subsequent to the specific media component TS code stream, wherein a PID of the first TS code stream is the same as a PID of the specific media component TS code stream and a value of payload_unit_start_indicator in a TS header field is a predetermined value; extracting a PTS from a extension header field of a PES carried in the TS code stream; determining the time information of the adaptive streaming according to a value of the PTS.

In one embodiment, the location descriptor further includes a media presentation description uniform resource locator, URL, field, wherein a value of the media presentation description URL field is used for determining a media presentation description URL of the adaptive streaming.

In one embodiment, the method further includes: extracting a force reload identifier from the location information; when a value of the force reload identifier is a predetermined value, reloading the media presentation description of the adaptive streaming.

In one embodiment, the method further includes: extracting a is_announcement flag from the location information of the adaptive streaming; when a value of the is_announcement flag is a predetermined value, extracting a time_before_activation field and a timescale field from the location information.

In one embodiment, determining the at least one segment, in the adaptive streaming, for timeline alignment with the transport stream according to the location information includes: determining media presentation description, MPD, of the adaptive streaming corresponding to the location information; determine the at least one segment for timeline alignment with the transport stream according to the location information and the MPD.

In one embodiment, determining the MPD of the adaptive streaming corresponding to the location information includes: extracting an MPD descriptor from a program map table, PMT, of the transport stream; and obtaining an URL of the MPD corresponding to the location information; or obtaining an URL of the MPD from the location information.

In one embodiment, determine the at least one segment for timeline alignment with the transport stream according to the location information and the MPD includes: replacing an identifier $EventStream$ of a segment template element @media attribute of the MPD with a value of an event stream scheme field and a value of an event stream value field carried in the location information; replacing an identifier $EventID$ of the segment template element @media attribute of the MPD with a value of an event identification field carried in the location information, to construct an identifier of an URL of each of the at least one segment, in the adaptive streaming, for timeline alignment with the transport stream.

In one embodiment, determine the at least one segment for timeline alignment with the transport stream according to the location information and the MPD includes: searching and determining a period element of the MPD by a value of an event stream scheme field and a value of an event stream value field carried in the location information; constructing an URL of each of the at least one segment, in the adaptive streaming, for timeline alignment with the transport stream according to values of @media and @mediaRange attributes of URL elements of the at least one segment.

In one embodiment, determine the at least one segment for timeline alignment with the transport stream according to the location information and the MPD includes: searching and determining a period element of the MPD by a value of an event stream scheme field and a value of an event stream value field carried in the location information, and searching and determining a event sub-element of the period element by a value of an event identification field carried in the location information; constructing an URL of each of the at least one segment, in the adaptive streaming, for timeline alignment with the transport stream according to values of @media and @mediaRange attributes of the event sub-element.

In one embodiment, determining the presence time stamp of the media presentation time of each of the at least one segment in the adaptive streaming relative to the timeline of the transport stream according to the time information includes: determining the PTS of media presentation time, relative to the timeline of the transport stream, of each of the at least one segment for timeline alignment with the transport stream according to the time information; calculating at least one subsequent segment in a period where the at least one segment located according to the PTS of the at least one segment for timeline alignment with the transport stream.

In one embodiment, determining the presence time stamp of the media presentation time of each of the at least one segment in the adaptive streaming relative to the timeline of the transport stream according to the time information further includes: setting a value of a PTS corresponding to a location descriptor of the adaptive streaming as the PTS of the media presentation time of each of the at least one segment relative to the timeline of the transport stream.

Another implementation disclosed herein is a method for processing adaptive streaming, as defined in appended claim 7.

In one embodiment, adding time information of the adaptive streaming in the transport stream includes: carrying the time information in a header extension field of the TEMI PES code stream.

In one embodiment, adding time information of the adaptive streaming in the transport stream includes: carrying a PTS in an extension header field of a PES of a payload of the TS code stream, wherein a value of the PTS is used for determining the time information of the adaptive streaming.

In one embodiment, adding time information of the adaptive streaming in the transport stream includes: configuring a PID of a TS code stream subsequent to a specific media component TS code stream to be the same as a PID of the specific media component TS code stream and a value of payload_unit_start_indicator in a TS header field is to be a predetermined value; carrying a PTS in a extension header field of a PES of a payload of the TS code stream, wherein a value of the PTS is used for determining the time information of the adaptive streaming.

In one embodiment, the location descriptor further includes a media presentation description uniform resource locator, URL, field, wherein a value of the media presentation description URL field is used for determining a media presentation description URL of the adaptive streaming.

In one embodiment, carrying an MPD descriptor in a program map table, PMT, of the transport stream, wherein the MPD descriptor includes: the media presentation description URL field; or carrying the media presentation description URL field in the location information.

Other implementations disclosed herein are devices for processing adaptive streaming, as defined in appended claims 10 and 11.

By at least some embodiments of the present invention, location information and time information of the adaptive streaming carried in a TS is obtained; at least one segment, in the adaptive streaming, for timeline alignment with the transport stream is determined according to the location information; a presence time stamp, PTS, of media presentation time of each of the at least one segment in the adaptive streaming relative to a timeline of the transport stream is determined according to the time information, so as to solve the problem of the related art resulted from a single reference clock, thereby achieving media contents synchronization playing under the hybrid delivery mode in broadcast and the broadband networks.

## Brief Description of the Drawings

The drawings described here are adopted to provide a further understanding to the disclosure, and form a part of the disclosure. Schematic embodiments of the disclosure and descriptions thereof are adopted to explain the disclosure and not intended to form improper limits to the disclosure. In the drawings:

Fig. 1 is a media synchronization system architecture schematic diagram for broadcast and broadband hybrid delivery according to an embodiment of the present invention.
Fig. 2 is a flowchart of a method for processing adaptive streaming according to an embodiment of the present invention.
Fig. 3 is a schematic diagram of obtaining location description of adaptive streaming according to an exemplary embodiment of the present invention.
Fig. 4 is a schematic diagram of obtaining location description of adaptive streaming according to another exemplary embodiment of the present invention.
Fig. 5 is an example diagram of determining at least one segment for timeline alignment according to an embodiment of the present invention.
Fig. 6 is an example diagram of determining at least one segment for timeline alignment according to another embodiment of the present invention.
Fig. 7 is an example diagram of determining at least one segment for timeline alignment according to another embodiment of the present invention.
Fig. 8 is a flowchart of a method for processing adaptive streaming according to another embodiment of the present invention.
Fig. 9 is a flowchart of a device for processing adaptive streaming according to an embodiment of the present invention.
Fig. 10 is a flowchart of a method for processing adaptive streaming according to another embodiment of the present invention.

## Detailed Description

The disclosure will be described below in detail with reference to the drawings and embodiments. It is important to note that the embodiments in the disclosure and characteristics in the embodiments may be combined under the condition of no conflicts.

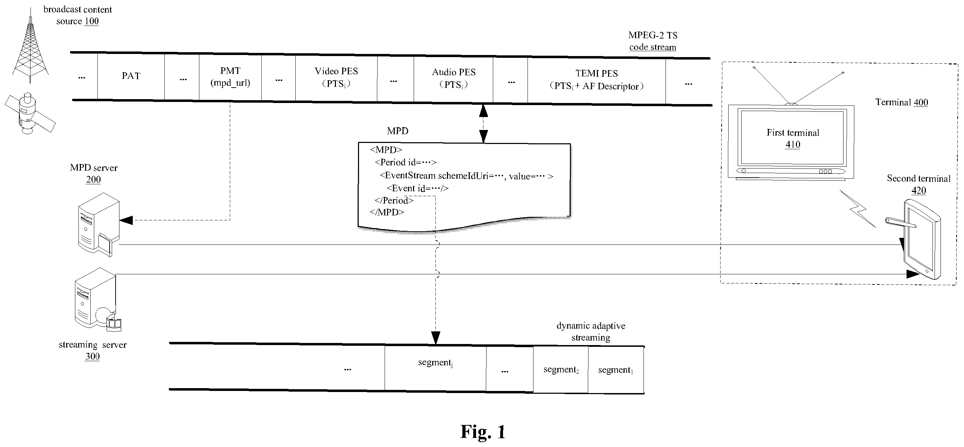

In one embodiment of the present invention, a media synchronization system for broadcast and broadband hybrid delivery is provided. Fig. 1 is a media synchronization system architecture schematic diagram for broadcast and broadband hybrid delivery according to an embodiment of the present invention. As shown in Fig.1, the system includes: a broadcast content source 100, a media presentation description (MPD) server 200, a streaming server 300, a first terminal 410 and a second terminal 420. The first terminal and the second terminal are two independent terminals and functions of these two terminals are implemented in one physical terminal. The system shown in Fig. 1 will be described below.

The broadcast content source 100 uses a moving picture experts group (MPEG)-2 standard, or other standards. The MPEG-2 standard is considered as an example to illustrate below. The broadcast content source 100, at a sending end, respectively inputs audio data and video data into corresponding encoders for compressing and encoding, so as to obtain an elemental stream (ES) of the audio data and the video data according to a coding model of the MPEG-2 standard. The ES is supplied to a packetizer for partitioning and grouping to form at least one packet elemental stream (PES) with different lengths. And then the at least one PES, program content information and condition receiving information are sent to a code stream multiplexer to generate a program stream (PS) or transport stream (TS).

MPEG-2 TS code stream payloads sent by the broadcast content source 100 carries PES packet code stream with different packet Identifications (PIDs). The TS code stream, of which a PID value is 0x0000, corresponds to a program association table (PAT). The PAT defines all of the programs of the TS, provides program initialization information, is a complete list of all the programs in the TS, and indicates program numbers of different programs and a PID of a program map table (PMT) associated with program contents. The PMT shows a correspondence relationship between each program number and corresponding transport streams of audio, video and other contents and a complete definition of each program, which includes a program number, PCR PID, stream type (such as audio, video and other data, etc.) as well as elementary stream PID, which points out a TS packet PID carrying audio and video contents) and other information. In addition, the MPEG-2 TS stream carries a timeline and external media information (TEMI) PES code stream, which is referred to TEMI PES. The TEMI PES code stream is arranged to indicate time information and location information of external media resources carried in the MPEG-2 TS code stream.

In the following embodiment, the adaptive streaming (or refer to dynamic adaptive streaming) is implemented in many ways. For example, dynamic adaptive streaming over HTTP (DASH) is employed. The DASH is taken as an example to illustrate the MPD server and the streaming server below. The following embodiment is also applicable to other adaptive streaming technologies.

The MPD server 200 is provided for storing MPD files of the dynamic adaptive streaming. The MPD files describes duration, uniform resource location (URL), media attributes, such as video resolution, adaptation bit rate and the like of each segment. The MPD files provide enough HTTP-URL information to access streaming content resources for at least one DASH client. When a DASH client starts playing a video, the DASH client chooses to download at least one segment adapt to current available network bandwidth and terminal cache status for playing.

The streaming server 300 completes cutting an original video into slices and generating the MPD files. The original video is cut into slices, which are stored in a hierarchy of period, representation and segment. The streaming server 300 returns at least one slice to a terminal according to a request sent by the terminal.

The terminal 400 includes: a first terminal 410, such as a digital television set-top box or a broadcast and wideband dual-mode set-top box, and a second terminal 420, such as a tablet computer, a smart phone, a handheld television device.

After the terminal 400 (at least one of first terminal 410 and the second terminal 420, which is referred to the terminal hereinafter) receives the MPEG-2TS code stream, the terminal bypasses the code stream into different parsing channels, parses an audio PES, a video PES, recombines the audio PES and the video PES to generate the ES, and respectively stores audio and video streams in corresponding caches according to different PIDs. One channel of a de-multiplexing component is dedicated to bind a TS flow, of which a PID value is 0x0000 and a PAT is parsed from the TS flow, so as to obtain a PID of the PMT required for a program. Through a channel binding, the PMT is found to extract the PCR and the time information, such as the PTS of the audio and video PES code stream in related programs from the code stream.

In an exemplary embodiment, after receiving the MPEG-2 TS stream, the terminal 400 also extracts a specific type of adaptation field (AF) descriptor and a PTS of a header field of the PES code stream corresponding to the AF descriptor carried in the TEMI PES code stream. The PTS is arranged to obtain the location information and the time information of the dynamic adaptive streaming.

In an exemplary embodiment, the terminal requests at least one MPD file of the dynamic adaptive streaming from the MPD server 200 according to the location information. The terminal 400 parses the acquired MPD file and determines at least one segment in the adaptive streaming, for timeline alignment with the MPEG-2 TS code stream.

In an exemplary embodiment, the terminal 400 determines determining the PTS of the MPT of at least one segment (including at least one segment for timeline alignment and subsequent segments in the same period) in the dynamic adaptive streaming relative to a timeline of the MPEG-2 TS code stream according to the time information.

In an exemplary embodiment, through a dynamic adaptive algorithm, the terminal periodically sends an HTTP request, obtain at least one segment with appropriate rate or quality version in the dynamic adaptive streaming, and implements an audio and video synchronization process according to PTS information of the audio and video PES stream of a program related to the MPEG-2 TS code stream and PTS information of the at least one segment in the dynamic adaptive streaming.

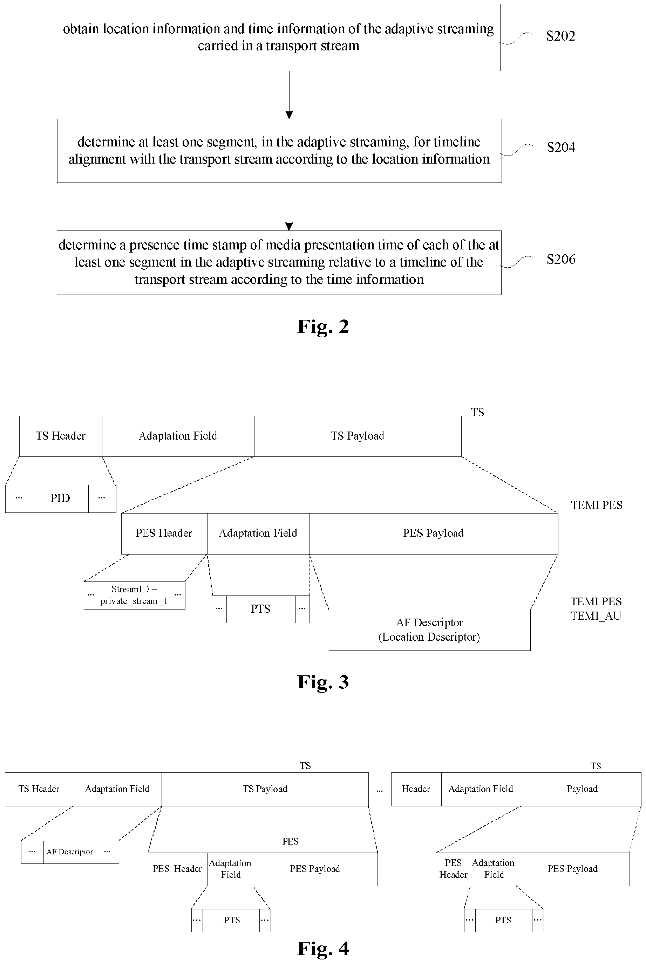

The method for processing dynamic adaptive streaming provide in an embodiment is illustrated with reference to the system architecture shown in Fig. 1 below. Fig. 2 is a flowchart of a method for processing dynamic adaptive streaming according to an embodiment of the present invention. As shown in Fig. 2, this flow includes the following steps.

At step S202, location information and time information of the adaptive streaming carried in a TS is obtained.

At step S204, at least one segment, in the adaptive streaming, for timeline alignment with the transport stream is determined according to the location information.

At step S206, a PTS of media presentation time of each of the at least one segment in the adaptive streaming relative to a timeline of the transport stream is determined according to the time information.

Through the above steps, at least one segment, in the adaptive streaming, for timeline alignment with the transport stream and the PTS of each of the at least one segment in the adaptive streaming are determined according to the location information and the time information of the adaptive streaming carried in the transport stream, so as to solve the problem in the related art resulted from hybrid media transmission with a single reference clock in broadcast and the broadband networks, thereby not only making media synchronization processing under the hybrid delivery mode more efficient, but also improving a scalability of service deployment.

An action of obtaining the location information and the time information is recorded in step S202. The action of obtaining the location information and the time information will be described in conjunction with the exemplary embodiments below.

The location information in step S202 is a location descriptor. Fig. 3 is a schematic diagram of obtaining location description of adaptive streaming according to an exemplary embodiment of the present invention. As shown in Fig. 3, the location descriptor is an AF location descriptor, which is carried in a payload of the PES, and a time value of the PTS is carried in the header extension field of the PES.

In an exemplary embodiment, a terminal parses and obtains a PMT of the transport stream, and then determine a PID of which a stream type is a predetermined value (such as 0x26), of a TEMI PES code stream. The terminal binds the PID with a channel of a de-multiplexing component and filters TS packets containing TEMI PES code stream. A value of the stream ID of the TEMI PES code stream is private_stream_1.

The terminal extracts the AF descriptor (namely the location descriptor of dynamic adaptive streaming), of which a value of af_descr_tag is a predetermined value (such as 0x05) and a value of a service_type field is a predetermined value (such as 0x01), from TEMI_AU of the TEMI PES code stream, so as to acquire the location information of the adaptive streaming.

As shown in Fig. 3, the terminal obtains the TEMI PES code stream from the transport stream, extracts the PTS from a extension header field of the TEMI PES code stream and sets the extracted PTS as a PTS corresponding to the location descriptor of the dynamic adaptive streaming, so as to acquire the time information of the dynamic adaptive streaming.

The location information is carried in another way. Fig. 4 is a schematic diagram of obtaining location description of adaptive streaming according to another exemplary embodiment of the present invention. As shown in Fig. 4, the AF descriptor is carried in the adaptation field of the TS stream.

According to a PES syntax description of the MPEG-2 standard, the stream ID indicates that an audio, video or data stream is carried in the payload of the PES. As shown in Fig. 4, the terminal obtains a specific media component (such as audio or video) TS code stream, of which a value of an extension descriptor tag is a predetermined value (such as 0x04), from the transport stream.

The terminal extracts the AF descriptor (namely the location descriptor of dynamic adaptive streaming), of which a value of af_descr_tag is a predetermined value (such as 0x05) and a value of a service_type field is a predetermined value (such as 0x01), from the adaptation field of the specific media component TS code stream, so as to acquire the location information of the adaptive streaming.

As shown in Fig. 4, the terminal obtains the specific media component (such as audio or video) TS code stream from the transport stream, extracts the PTS from a extension header field of the specific media component (such as audio or video) TS code stream and sets the extracted PTS as a PTS corresponding to the location descriptor of the dynamic adaptive streaming, so as to acquire the time information of the dynamic adaptive streaming.

Or the terminal obtains the first TS code stream subsequent to the specific media component (such as audio or video) TS code stream, and a PID of the first TS code stream is the same as a PID of the specific media component TS code stream and a value of payload_unit_start_indicator in a TS header field is one. The terminal extracts a PTS from an extension header field of a PES carried in the TS code stream and sets the extracted PTS as a PTS corresponding to the location descriptor of the dynamic adaptive streaming, so as to acquire the time information of the dynamic adaptive streaming.

In the above embodiments and alternative embodiments, the existing location descriptor is extended. Table One is a syntax structure table of the location descriptor of the adaptive streaming according to an embodiment of the present invention.

As shown in Table One, the extension define of the location descriptor of the adaptive streaming of this embodiment is as follows. The service type being the DASH is taken as an example.

Uimsbf (unsigned integer most significant bit first) indicates unsigned integer most significant bit first.

Timeline_id indicates an uniquely identifier of the location descriptor of the MPEG-2 TS code stream.

Force_reload, which is 1-bit flag, indicates whether to reload the MPD before the DASH synchronization (namely performing timeline alignment on the at least one segment).

Is_announcement, which is 1-bit flag, indicates that at least one DASH segment corresponding to the location descriptor has not been in a play (active) state.

Time_before_activation indicates the remain time of resources, entering into a play state, referenced by the location descriptor.

Timescale incicates a time value of a time_before_activation field.

Table One

| Syntax | Nb bits | Mnemonic |
|---|---|---|
| temi_location_descriptor { | | |
|     af_descr_tag | 8 | uimsbf |
|     af_descr_length | 8 | uimsbf |

8

(continued)

| Syntax | Nb bits | Mnemonic |
|---|---|---|
| force_reload | 1 | uimsbf |
| is_announcement | 1 | uimsbf |
| splicing_flag | 1 | uimsbf |
| use_base_temi_url | 1 | uimsbf |
| reserved | 5 | uimsbf |
| timeline_id | 7 | uimsbf |
| if (is_announcement) { | | |
| timescale | 32 | uimsbf |
| time_before_activation | 32 | uimsbf |
| } | | |
| | | |
| if (!use_base_temi_url) { | | |
| url_scheme | 8 | uimsbf |
| url_path_length | 8 | uimsbf |
| for (i=0;i< url_path_length;i++) { | | |
| url_path | 8 | uimsbf |
| } | | |
| } | | |
| nb_addons | 8 | uimsbf |
| for (i=0;i < nb_addons ;i++) { | | |
| service_type | 8 | uimsbf |
| if (service_type==0) { | | |
| mime_length | 8 | uimsbf |
| for (j=0; j<mime_length; j++) { | | |
| mime_type | 8 | uimsbf |
| } | | |
| } | | |
| if (service_type==1) { | | |
| event_schemeIdUri_length | 8 | uimsbf |
| for (j=0; j< event_schemeIdUri_length;j++) { | 8 | uimsbf |
| event_schemeIdUri | | |
| } | 8 | uimsbf |
| event_stream_value | 8 | uimsbf |
| event_id | 8 | uimsbf |
| mpd_url_length | | |
| for (j=0; j< mpd_url_length;j++) { | 8 | uimsbf |
| mpd_url | | |
| } | 8 | uimsbf |
| } | | |
| url_subpath_len | 8 | uimsbf |
| for (j=0; j< url_subpath_len;j++) { | | |
| addon_location | | |
| } | | |
| } | | |
| } | | |

Service_type indicates a service type of external resources referenced by the location descriptor. When service_type == 1, the service type is "MPEG-DASH". At this time, the location information carried in the location descriptor is arranged to map between the MPT of each of at least one DASH segment and the PTS of the MPEG-2 TS code stream. That is, the synchronization is completed between the DASH streaming and the MPEG-2 TS code stream.

As shown in Table One, the location information the mapping relationship established between the time information of the DASH streaming and the time information of the transport stream refers to Timeline Alignment Event Stream, which is defined as follows.

Event_stream_schemeldUri indicates when service_type==1, the location descriptor includes an event_stream_schemeldUri field, which follows a uniform resource name (URN) or a uniform resource locator (URL) syntax specification and used for uniquely identifying a scheme of the Timeline Alignment Event Stream.

Event_stream_value indicates when service_type==1, the location descriptor includes a event_stream_value field, of which a value space is defined by a message scheme of the Timeline Alignment Event Stream identified by event_schemeldUri and which is used for identifying the event stream of the event stream scheme.

Event_id indicates when service_type==1, the location descriptor includes an event_id field, which is used for an event of the Timeline Alignment Event Stream.

Both the event message scheme identifier field and event stream value field identify the Timeline Alignment Event Stream. The event identifier field is used for a specific timeline alignment event of the Timeline Alignment Event Stream.

Alternatively, mpd_url indicates when service_type==1, a value of the mpd_url is an URL of a MPD of a DASH corresponding to the location descriptor.

In an exemplary embodiment, the PMT acquired by the terminal includes a MPD descriptor of the adaptive streaming, which is defined as shown in Table Two. Taking the DASH as an example:

Table Two

| Syntax | No. of bits | Format |
|---|---|---|
| MPD_descriptor{ | | |
|     descriptor_tag | 8 | uimsbf |
|     descriptor_length | 8 | uimsbf |
|     for (i =0; i < N; i++) { | | |
|         mpd_url | 8 | bslbf |
|     } | | |
| } | | |

Bslbf (bit string, left bit first) indicates bit string, left bit first.

A value of mpd_url corresponds to the URL of the MPD of the DASH of the location descriptor of the adaptive streaming.

Above-mentioned step S204 records that at least one segment, in the adaptive streaming, for timeline alignment with the transport stream is determined according to the location information. It will be described with reference to an exemplary embodiment below.

In the dynamic adaptive streaming technology, the MPD is a document which includes metadata required for construing, by a DASH client, an HTTP-URL of each of the at least one segment so that the DASH client accesses the at least one segment to provide streaming services for users.

The MPD includes events, which are used for informing the DASH client or a DASH application of aperiodic information. The events are timed. That is, the events start from a particular time point of the MPT and usually last for some time. The events include specific DASH notification events and specific application events.

Corresponding to timeline alignment events contained in the location descriptor, the period elements of the MPD includes sub-elements of the timeline alignment event stream.

EventStream@schemeldUri attribute is used for uniquely identifying a message scheme of the timeline alignment event stream. EventStream@ value attribute, of which a value space is defined by a message scheme of the timeline alignment event stream identified by event_schemeldUri, is set as a value of the timeline alignment event stream. EventStream element includes a series of event elements, which are uniquely identified by Event.id attribute, of the timeline alignment event stream of the same type.

In this embodiment, the terminal obtains the corresponding MPD according to the location information in different ways.

The terminal extracts the MPD descriptor of the dynamic adaptive streaming from the PMT and obtains the URL of the MPD of the dynamic adaptive streaming corresponding to the location information according to a value of an mpd_url field contained in the MPD descriptor. Or

The terminal extracts the location descriptor of the dynamic adaptive streaming and obtains the URL of the MPD of the dynamic adaptive streaming corresponding to the location information according to a value of an mpd_url field contained in the location descriptor.

There are many ways when determining the at least one segment, in the adaptive streaming, for timeline alignment with the transport stream according to the location information. It will be described in conjunction with different ways below.

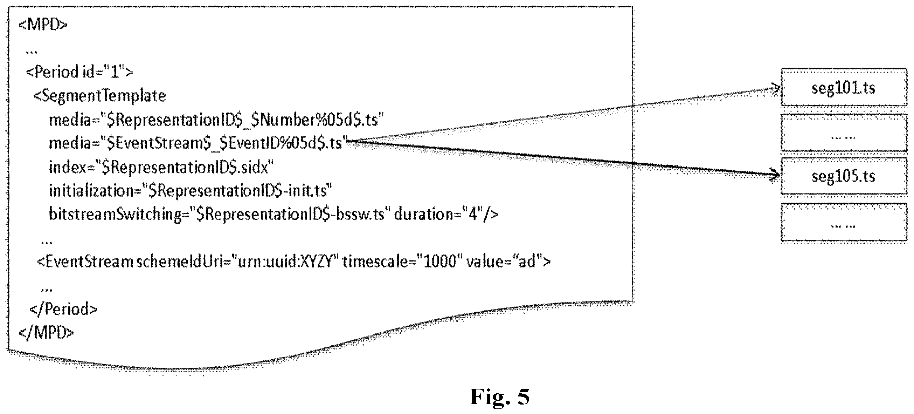

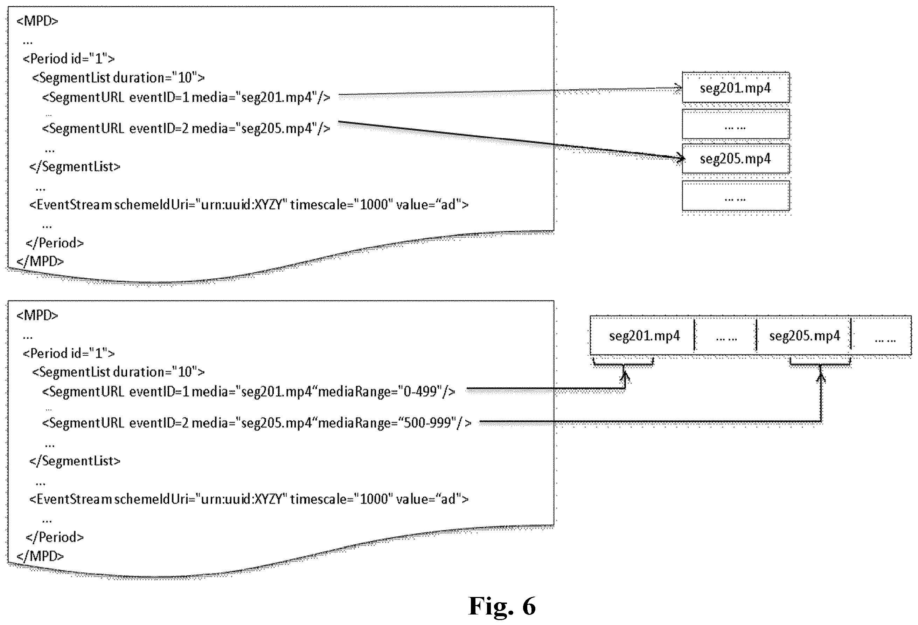

Fig. 5 is an example diagram of determining at least one segment for timeline alignment according to an embodiment of the present invention. As shown in Fig. 5, the terminal searches and determines a period element, of which a @id attribute value is "1" as shown in Fig. 6, of the MPD according to a value, which is "urn:uuid:XYZY", of an event stream scheme field and a value, which is "ad", of an event stream value field carried in the location information.

The terminal replaces an identifier $EventID$ of the segment template element @media attribute of the period element with a value, which is "urn:uuid:XYZY", of an event stream scheme identification field and a value, which is "ad", of the event stream value field carried in the location descriptor. The terminal replaces the identifier $EventID$ of the segment template element @media attribute of the period element with a value, which is "1", of an event_id field. At the same time, the terminal constructs an HTTP URL, namely "http://www.example.com/uuid:XYZY/ad_00001 .ts", of each of the at least one segment, in the adaptive streaming, for timeline alignment with the transport stream by means of BaseURL elements, such as http://www.example.com/, defined in other hierarchies of the MPD.

Corresponding to a value, which is "2", of the event_id field of the location descriptor of the same type carried in the transport stream, the terminal constructs the next HTTP URL, namely "http://www.example.com/uuid: XYZY/ad_00002.ts", of each of the at least one segment, in the adaptive streaming, for timeline alignment with the transport stream, and so on.

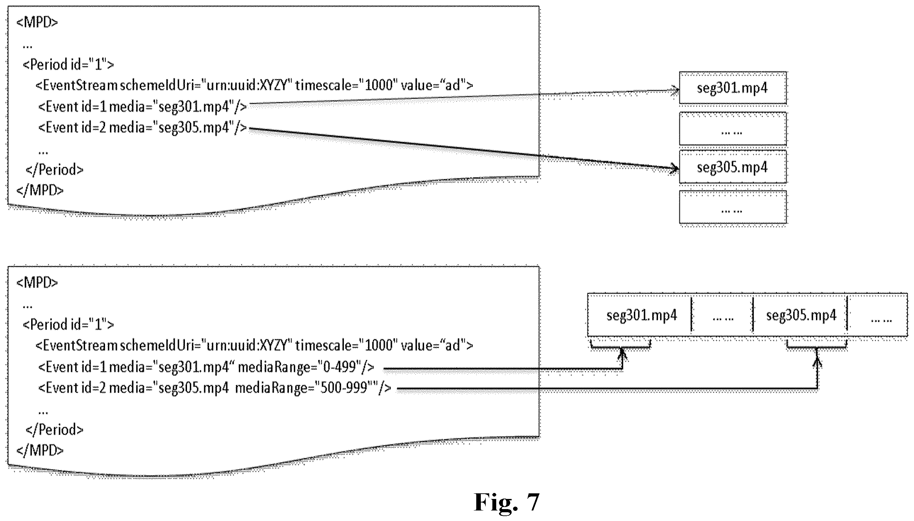

Fig. 6 is an example diagram of determining at least one segment for timeline alignment according to another embodiment of the present invention. As shown in Fig. 6, the terminal searches and determines a period element of the MPD, of which a @id attribute value is "1" as shown in Fig. 7, of the MPD according to a value, which is "urn:uuid:XYZY", of an event stream scheme field and a value, which is "ad", of an event stream value field carried in the location information.

The terminal searches and determines a SegmentURL sub-element of a period element, of which a @eventID attribute value is "1" as shown in Fig. 7, of the MPD according to a value, which is "1", of an event identification field carried in the location information.

The terminal constructs an HTTP URL, namely "http://www.example.com/ seg201.mp4", of each of the at least one segment, in the adaptive streaming, for timeline alignment with the transport stream and alternative range request header field "Range: bytes=0-499" according to @media and @mediaRange attributes of the SegmentURL in combination with BaseURL elements, such as http://www.example.com/, defined in other hierarchies of the MPD.

Corresponding to a value, which is "2", of the event_id field of the location descriptor of the same type carried in the transport stream, the terminal constructs the next HTTP URL, namely "http://www.example.com/ seg205.mp4", of each of the at least one segment, in the adaptive streaming, for timeline alignment with the transport stream and alternative range request header field "Range: bytes=500-999", and so on.

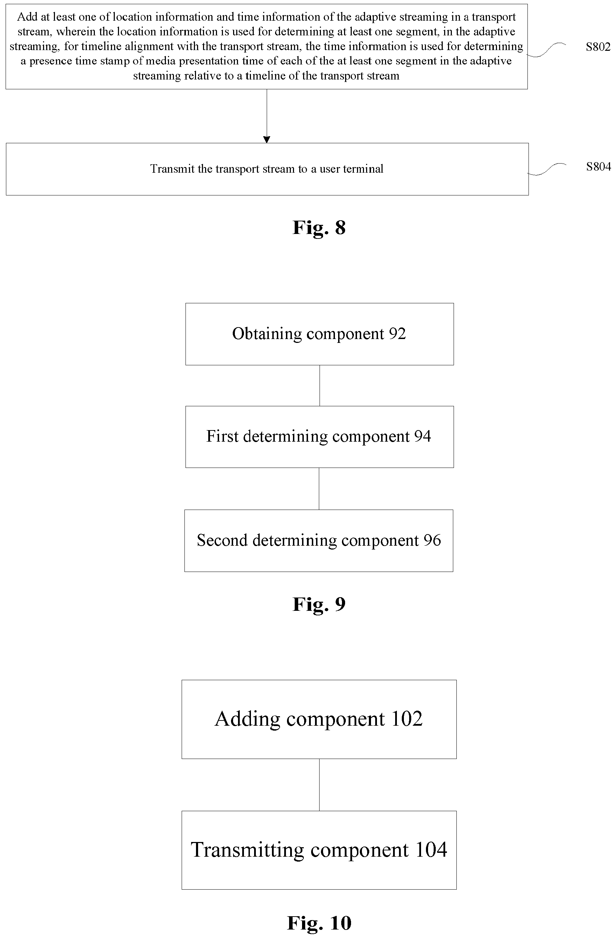

Fig. 7 is an example diagram of determining at least one segment for timeline alignment according to another embodiment of the present invention. As shown in Fig. 7,
the terminal searches and determines a period element of the MPD, of which a @id attribute value is "1" as shown in Fig. 8, of the MPD according to a value, which is "urn:uuid:XYZY", of an event stream scheme field and a value, which is "ad", of an event stream value field carried in the location information.

The terminal searches and determines a Event sub-element of a period element, of which a @id attribute value is "1" as shown in Fig. 8, of the MPD according to a value, which is "1", of an event identification field carried in the location information.

The terminal constructs an HTTP URL, namely "http://www.example.com/ seg301.mp4", of each of the at least one segment, in the adaptive streaming, for timeline alignment with the transport stream and alternative range request header field "Range: bytes=0-499" according to @media and @mediaRange attributes of the Event in combination with BaseURL elements, such as http://www.example.com/, defined in other hierarchies of the MPD.

Corresponding to a value, which is "2", of the event_id field of the location descriptor of the same type carried in the transport stream, the terminal constructs the next HTTP URL, namely "http://www.example.com/ seg305.mp4", of each of the at least one segment, in the adaptive streaming, for timeline alignment with the transport stream and alternative range request header field "Range: bytes=500-999", and so on.

In an exemplary embodiment, when determining the at least one segment, in the adaptive streaming, for timeline alignment with the transport stream, the terminal extracts a force_reload flag from the location descriptor of the adaptive streaming. When a value of the force_reload flag is 0x01, the terminal reloads the MPD of the dynamic adaptive streaming.

In an exemplary embodiment, when determining the at least one segment, in the adaptive streaming, for timeline alignment with the transport stream, the terminal extracts an is_announcement flag from the location descriptor of the adaptive streaming. When a value of the is_announcement flag is 0x01, the terminal extracts the time_before_activation field and the timescale field from the location descriptor of the adaptive streaming.

In an exemplary embodiment, when determining the at least one segment, in the adaptive streaming, for timeline alignment with the transport stream, the terminal extracts the force_reload flag from the location information. When a value of the force_reload flag is a predetermined value, the terminal reloads the MPD of the DASH.

In an exemplary embodiment, when determining the at least one segment, in the adaptive streaming, for timeline alignment with the transport stream, the terminal extracts an is_announcement flag from the location information. When a value of the is_announcement flag is a predetermined value, the terminal extracts the time_before_activation field and the timescale field from the location information.

Step S206 records that the PTS of media presentation time of each of the at least one segment in the adaptive streaming relative to a timeline of the transport stream is determined according to the time information, which will be described in conjunction with the exemplary embodiments below.

One of the main characteristics of DASH is that a global unified timeline is shared by encoded versions of different media components. Presentation time of an access element of media contents is mapped to a global unified presentation timeline, so as to synchronize the different media components and implement the same seamless handover among different encoded versions of the same media components.

Presentation time within each period is obtained by subtracting @presentationTimeOffset, namely a value of TO, contained in PeriodStart time period, by PeriodStart time period. This means that, for the access element, of which the presentation time of the adaptive streaming is TP, a value of the MPT relative to PeriodStart is calculated as follows: TM=TP-TO.

The MPT of each of the at least one segment of the period has a predetermined relationship, such as continuous, according to segment timeline rules of the dynamic adaptive streaming defined in the MPD. Therefore, a MPT of each of the at least one subsequent segment is deduced according to a MPT of one segment in the period.

In an exemplary embodiment of the present invention, the terminal determines at least one subsequent segment in a period where the at least one segment located according to the PTS of the at least one segment for timeline alignment with the transport stream. Particularly, when the PTS of each of the at least one segment for timeline alignment represents a PTS relative to the timeline of the transport stream, the relationship is as follows:

$$\text{Segments PTS(in seconds)} = [(S\text{-}Ssyn)*@duration]/SegmentBase.timescale+Segmentsyn\ PTS(in\ seconds),$$

in which, Ssyn is a number of the at least one segment, in the dynamic adaptive streaming, for timeline alignment with the transport stream in a period, S is a number of other subsequent segments in a period.

Segmentsyn PTS represents the PTS, relative to the timeline of the transport stream, of each of the at least one segment for timeline alignment with the transport stream. Segment PTS represents the PTS of media presentation time, relative to the timeline of the transport stream, of other subsequent segments in a period.

@duration and SegmentBase.timescale are respectively @duration and @timescale attribute values of the period element where the at least one segment located.

In an exemplary embodiment of the present invention, the terminal determines the PTS of media presentation time, relative to the timeline of the transport stream, of each of the at least one segment, in the dynamic adaptive streaming, for timeline alignment with the transport stream according to the PTS corresponding to the location descriptor of the dynamic adaptive streaming, namely:

$$\text{Segmentsyn PTS (in seconds)} = PTSi/90000,$$

in which, PTSi is the PTS corresponding to the location descriptor of the dynamic adaptive streaming.

Segmentsyn PTS is the PTS of media presentation time, relative to the timeline of the transport stream, of each of the at least one segment, in the dynamic adaptive streaming, for timeline alignment with the transport stream.

Fig. 8 is a flowchart of another method for processing adaptive streaming according to an embodiment of the present invention. As shown in Fig. 8, the method includes the following steps.

At step S802, at least one of location information and time information of the adaptive streaming in a transport stream, wherein the location information is used for determining at least one segment, is added in the adaptive streaming, for timeline alignment with the transport stream, the time information is used for determining a presence time stamp, PTS, of media presentation time of each of the at least one segment in the adaptive streaming relative to a timeline of the transport stream.

At step S804, the transport stream is transmitted to a user terminal.

Through the above steps, by adding the predetermined type of the code stream in the transport stream and transmitting the transport stream to the user terminal, the problem in the related art resulted from hybrid media transmission with a single reference clock in broadcast and the broadband networks is solved, thereby not only making media synchronization processing under the hybrid delivery mode more efficient, but also improving a scalability of service deployment.

In an exemplary embodiment, when the location information of the adaptive streaming is added in the transport stream, a PID is added in a PMT of the transport stream. And the PID is used for obtaining a TEMI PES code stream, of which a stream type value is a predetermined value, and the TEMI PES code stream carries the location information.

After the location information of the adaptive streaming is added in the transport stream, the time information of the adaptive streaming is also added in the transport stream. In an exemplary embodiment, the time information of the adaptive streaming is added in the transport stream includes that: the time information is carried in a header extension field of the TEMI PES code stream.

In an exemplary embodiment, when the location information of the adaptive streaming is added in the transport stream, a specific media component TS code stream, of which a value of an extension descriptor tag is a predetermined value, is carried in the transport stream, and an adaptation field of the TS code stream carries the location information.

After the location information of the adaptive streaming is added in the transport stream, the time information of the adaptive streaming is also added in the transport stream. In an exemplary embodiment, the time information of the adaptive streaming is added in the transport stream includes that: a PTS is carried in an extension header field of a PES of a payload of the TS code stream, and a value of the PTS is used for determining the time information of the adaptive streaming.

The time information of the adaptive streaming is added in the transport stream further includes that: a PID of a TS code stream subsequent to a specific media component TS code stream is configured to be the same as a PID of the specific media component TS code stream and a value of payload_unit_start_indicator in a TS header field is configured to be a predetermined value. A PTS is carried in a extension header field of a PES of a payload of the TS code stream, and a value of the PTS is used for determining the time information of the adaptive streaming.

In an exemplary embodiment, an adaptation field descriptor, of which a tag field value is a predetermined value and a service type field value is a predetermined value, of a payload of the TEMI PES code stream or an adaptation field of the specific media component TS code stream is carried in the transport stream. And the adaptation field descriptor is set as the location descriptor and the location descriptor comprises the location information.

In an exemplary embodiment, the above-mentioned location descriptor further includes at least one of the following: an unique identification of the location descriptor in the transport stream, a forced reload flag, a is_announcement flag, a time_before_activation flag, a timescale, a service type. The forced reload flag is used for indicating whether to reload the MPD before the at least one segment performs the timeline alignment. The is_announcement flag is used for indicating that the at least one segment, in the adaptive streaming, corresponding to the location descriptor has not been in a media player. The time_before_activation flag is used for indicating remain time of the at least one segment, in the adaptive streaming, corresponding to the location descriptor entering into a playing state. The timescale is used for indicating a time value of a remain time field. The service type is used for indicating a service type of external resources referenced by the location descriptor.

In an exemplary embodiment, the transport stream also carries information for determining the MPD of the adaptive streaming corresponding to the location information.

In an exemplary embodiment, an MPD descriptor is carried in a PMT of the transport stream, and the MPD descriptor includes: the media presentation description URL field. Or the URL of the MPD is obtained from the location information.

Another embodiment further provides a device for processing adaptive streaming. The device is arranged to implement the abovementioned embodiments and exemplary implementation modes, and what has been described will not be elaborated. For example, term "component", used below, is a combination of at least one of software and hardware capable of realizing a preset function. Although the device described in the following embodiment is implemented with software, implementation with hardware or a combination of the software and the hardware is also possible and conceivable.

Fig. 9 is a structural block diagram of a device for processing adaptive streaming according to an embodiment of the present invention. As shown in Fig. 9, the device includes: an obtaining component 92, a first determining component 94 and a second determination component 96. The device for processing adaptive streaming will be described below.

The obtaining component 92 is arranged to obtain location information and time information of the adaptive streaming carried in a transport stream. The first determining component 94 is connected with the obtaining component 92 and arranged to determine at least one segment, in the adaptive streaming, for timeline alignment with the transport stream according to the location information. The second determining component 96 is connected with the first determining component 94 and arranged to determine a presence time stamp of media presentation time of each of the at least one segment in the adaptive streaming relative to a timeline of the transport stream according to the time information.

Fig. 10 is a structural block diagram of another device for processing adaptive streaming according to an embodiment of the present invention. As shown in Fig. 10, the device 102 includes: an adding component 102 and a sending component 104. The device for processing adaptive streaming will be described below.

The adding component 102 is arranged to add at least one of location information and time information of the adaptive streaming in a transport stream, wherein the location information is used for determining at least one segment, in the adaptive streaming, for timeline alignment with the transport stream, the time information is used for determining a presence time stamp, PTS, of media presentation time of each of the at least one segment in the adaptive streaming relative to a timeline of the transport stream. The transmitting component 104 is connected with the adding component 102 and arranged to transmit the transport stream to a user terminal.

Industrial Applicability: through the above description, in at least some embodiments of the present invention, at least one segment, in the adaptive streaming, for timeline alignment with the transport stream and the PTS of each of the at least one segment in the adaptive streaming are determined according to the location information and the time information of the adaptive streaming carried in the transport stream, so as to solve the problem in the related art resulted from hybrid media transmission with a single reference clock in broadcast and the broadband networks, thereby not only making media synchronization processing under the hybrid delivery mode more efficient, but also improving a scalability of service deployment.

Obviously, those skilled in the art should know that each component or each step of the disclosure is implemented by a universal computing device, and the components or steps are concentrated on a single computing device or distributed on a network formed by a plurality of computing devices, and are optionally implemented by program codes executable for the computing devices, so that the components or steps are stored in a storage device for execution with the computing devices. The shown or described steps are executed in sequences different from those described here in some circumstances, or form each integrated circuit component respectively, or multiple components or steps therein may form a single integrated circuit component for implementation. As a consequence, the disclosure is not limited to any specific hardware and software combination.

**Claims**

**1.** A method for processing adaptive streaming, comprising:

obtaining location information and time information of the adaptive streaming carried in a transport stream, TS (S202);
determining at least one segment, in the adaptive streaming, for timeline alignment with the transport stream according to the location information (S204);
determining a presence time stamp, PTS, of media presentation time of each of the at least one segment in the adaptive streaming relative to a timeline of the transport stream according to the time information (S206);
**characterized in that** obtaining the location information of the adaptive streaming carried in the transport stream comprises: parsing a program map table, PMT, from the transport stream, determining a packet identifier, PID, of which a stream type is a predetermined value, of a Timeline and External Media Information, TEMI, Packet Elemental Stream, PES, stream; filtering the TEMI PES stream according to the PID; extracting a location descriptor of the adaptive streaming carried in the TEMI PES stream and setting the location descriptor as the location information;
or obtaining the location information of the adaptive streaming carried in the transport stream comprises: obtaining a specific media component TS stream, of which a value of an extension descriptor tag is a predetermined value, from the transport stream; extracting a location descriptor of the adaptive streaming carried in an adaptation field of the specific media component TS stream and setting the location descriptor as the location information;
wherein extracting the location descriptor of the adaptive streaming comprises:
extracting an adaptation field descriptor from a payload of the TEMI PES stream or an adaptation field of the specific media component TS stream, and setting the adaptation field descriptor as the location descriptor, wherein a tag field value of the adaptation field descriptor is a predetermined value and a service type field value of the adaptation field descriptor is a predetermined value;
wherein the location descriptor comprises at least one of the following: event stream scheme identifier field, event stream value field, event identifier field; wherein the event stream scheme identifier field is used for uniquely identifying an event stream scheme, the event stream value field is used for uniquely identifying event stream in the event stream scheme and the event identifier field is used for uniquely identifying events of the event stream.

**2.** The method as claimed in claim 1, wherein obtaining the time information of the adaptive streaming carried in the transport stream comprises: extracting a presence time stamp, PTS, contained in a extension header field of the TEMI PES stream; determining the time information of the adaptive streaming according to a value of the PTS; or obtaining the time information of the adaptive streaming carried in the transport stream comprises: extracting a PTS from a extension header field of a PES carried in a payload of the specific media component TS stream; determining the time information of the adaptive streaming according to a value of the PTS; or obtaining the time information of the adaptive streaming carried in the transport stream comprises: obtaining the first TS stream subsequent to the specific media component TS stream, wherein a PID of the first TS stream is the same as a PID of the specific media component TS stream and a value of payload_unit_start_indicator in a TS header field is a predetermined value; extracting a PTS from an extension header field of a PES carried in the TS stream; determining the time information of the adaptive streaming according to a value of the PTS.

**3.** The method as claimed in claim 1, wherein the location descriptor further comprises a media presentation description uniform resource locator, URL, field, wherein a value of the media presentation description URL field is used for determining a media presentation description URL of the adaptive streaming; or the method further comprises: extracting a force reload identifier from the location information; when a value of the force reload identifier is a predetermined value, reloading the media presentation description of the adaptive streaming; or the method further comprises: extracting a is_announcement flag from the location information of the adaptive streaming; when a value of the is_announcement flag is a predetermined value, extracting a time_before_activation field and a timescale field from the location information.

**4.** The method as claimed in any one of claims 1-3, wherein determining the at least one segment, in the adaptive streaming, for timeline alignment with the transport stream according to the location information comprises: determining media presentation description, MPD, of the adaptive streaming corresponding to the location information; determine the at least one segment for timeline alignment with the transport stream according to the location information and the MPD; wherein determining the presence time stamp of the media presentation time of each of the at least one segment in the adaptive streaming relative to the timeline of the transport stream according to the time information comprises: determining the PTS of media presentation time, relative to the timeline of the transport stream, of each of the at least one segment for timeline alignment with the transport stream according to the time information; calculating at least one subsequent segment in a period where the at least one segment located according to the PTS of the at least one segment for timeline alignment with the transport stream.

**5.** The method as claimed in claim 4, wherein determining the MPD of the adaptive streaming corresponding to the location information comprises: extracting an MPD descriptor from a program map table, PMT, of the transport stream; and obtaining an URL of the MPD corresponding to the location information; or obtaining an URL of the MPD from the location information; wherein determine the at least one segment for timeline alignment with the transport stream according to the location information and the MPD comprises: replacing an identifier $EventStream$ of a segment template element @media attribute of the MPD with a value of an event stream scheme field and a value of an event stream value field carried in the location information; replacing an identifier $EventID$ of the segment template element @media attribute of the MPD with a value of an event identification field carried in the location information, to construct an identifier of an URL of each of the at least one segment, in the adaptive streaming, for timeline alignment with the transport stream; or determine the at least one segment for timeline alignment with the transport stream according to the location information and the MPD comprises: searching and determining a period element of the MPD by a value of an event stream scheme field and a value of an event stream value field carried in the location information; constructing an URL of each of the at least one segment, in the adaptive streaming, for timeline alignment with the transport stream according to values of @media and @mediaRange attributes of URL elements of the at least one segment; or determine the at least one segment for timeline alignment with the transport stream according to the location information and the MPD comprises: searching and determining a period element of the MPD by a value of an event stream scheme field and a value of an event stream value field carried in the location information, and searching and determining a event sub-element of the period element by a value of an event identification field carried in the location information; constructing an URL of each of the at least one segment, in the adaptive streaming, for timeline alignment with the transport stream according to values of @media and @mediaRange attributes of the event sub-element.

**6.** The method as claimed in claim 5, wherein determining the presence time stamp of the media presentation time of each of the at least one segment in the adaptive streaming relative to the timeline of the transport stream according to the time information further comprises:

setting a value of a PTS corresponding to a location descriptor of the adaptive streaming as the PTS of the media presentation time of each of the at least one segment relative to the timeline of the transport stream.

7. A method for processing adaptive streaming, comprising:

adding at least one of location information and time information of the adaptive streaming in a transport stream, wherein the location information is used for determining at least one segment, in the adaptive streaming, for timeline alignment with the transport stream, the time information is used for determining a presence time stamp, PTS, of media presentation time of each of the at least one segment in the adaptive streaming relative to a timeline of the transport stream (S802); and

transmitting the transport stream to a user terminal (S804);

**characterized in that** adding location information of the adaptive streaming in the transport stream comprises: adding a packet identifier, PID, in a program map table, PMT, of the transport stream, wherein the PID is used for obtaining a Timeline and External Media Information, TEMI, Packet Elemental Stream, PES, stream, of which a stream type value is a predetermined value, and the TEMI PES stream carries the location information; or adding location information of the adaptive streaming in the transport stream comprises: carrying a specific media component TS stream, of which a value of an extension descriptor tag is a predetermined value, in the transport stream, wherein an adaptation field of the TS stream carries the location information;

wherein carrying an adaptation field descriptor, of which a tag field value is a predetermined value and a service type field value is a predetermined value, of a payload of the TEMI PES stream or an adaptation field of the specific media component TS stream in the transport stream, wherein the adaptation field descriptor is set as the location descriptor and the location descriptor comprises the location information;

wherein the location descriptor comprises at least one of the following: event stream scheme identifier field, event stream value field, event identifier field; wherein the event stream scheme identifier field is used for uniquely identifying an event stream scheme, the event stream value field is used for uniquely identifying an event stream in the event stream scheme and the event identifier field is used for uniquely identifying events of the event stream.

8. The method as claimed in claim 7, wherein adding time information of the adaptive streaming in the transport stream comprises:

carrying the time information in a header extension field of the TEMI PES stream;

or adding time information of the adaptive streaming in the transport stream comprises: carrying a PTS in a extension header field of a PES of a payload of the TS stream, wherein a value of the PTS is used for determining the time information of the adaptive streaming;

or adding time information of the adaptive streaming in the transport stream comprises: configuring a PID of a TS stream subsequent to a specific media component TS stream to be the same as a PID of the specific media component TS stream and a value of payload_unit_start_indicator in a TS header field to be a predetermined value; carrying a PTS in a extension header field of a PES of a payload of the TS stream, wherein a value of the PTS is used for determining the time information of the adaptive streaming.

9. The method as claimed in claim 7, wherein the location descriptor further comprises a media presentation description uniform resource locator, URL, field, wherein a value of the media presentation description URL field is used for determining a media presentation description URL of the adaptive streaming;

carrying an MPD descriptor in a program map table, PMT, of the transport stream, wherein the MPD descriptor comprises: the media presentation description URL field; or carrying the media presentation description URL field in the location information.

10. A device for processing adaptive streaming, comprising:

an obtaining component (92) to obtain location information and time information of the adaptive streaming carried in a transport stream, TS;

a first determining component (94) to determine at least one segment, in the adaptive streaming, for timeline alignment with the transport stream according to the location information;

a second determining component (96) to determine a presence time stamp, PTS, of media presentation time of each of the at least one segment in the adaptive streaming relative to a timeline of the transport stream according to the time information;

**characterized in that** the obtaining component (92) is further configured to parse a program map table, PMT, from the transport stream, determine a packet identifier, PID, of which a stream type is a predetermined value, of a Timeline and External Media Information, TEMI, Packet Elemental Stream, PES, stream; filter the TEMI PES stream according to the PID; extract a location descriptor of the adaptive streaming carried in the TEMI PES stream and setting the location descriptor as the location information;

or the obtaining component (92) is further configured to obtain a specific media component TS stream, of which a value of an extension descriptor tag is a predetermined value, from the transport stream; extract a location descriptor of the adaptive streaming carried in an adaptation field of the specific media component TS stream and setting the location descriptor as the location information;

wherein, that the obtaining component (92) is configured to extract the location descriptor of the adaptive streaming comprises the following steps: extracting an adaptation field descriptor from a payload of the TEMI PES stream or an adaptation field of the specific media component TS stream, and setting the adaptation field descriptor as the location descriptor, wherein a tag field value of the adaptation field descriptor is a predetermined value and a service type field value of the adaptation field descriptor is a predetermined value;

wherein the location descriptor comprises at least one of the following: event stream scheme identifier field, event stream value field, event identifier field; wherein the event stream scheme identifier field is used for uniquely identifying an event stream scheme, the event stream value field is used for uniquely identifying an event stream in the event stream scheme and the event identifier field is used for uniquely identifying events of the event stream.

11. A device for processing adaptive streaming, comprising:

an adding component (102) to add at least one of location information and time information of the adaptive streaming in a transport stream, wherein the location information is used for determining at least one segment, in the adaptive streaming, for timeline alignment with the transport stream, the time information is used for determining a presence time stamp, PTS, of media presentation time of each of the at least one segment in the adaptive streaming relative to a timeline of the transport stream;

a transmitting component (104) to transmit the transport stream to a user terminal;

**characterized in that** the adding component (102) is further configured to add a packet identifier, PID, in a program map table, PMT, of the transport stream, wherein the PID is used for obtaining a Timeline and External Media Information, TEMI, Packet Elemental Stream, PES, stream, of which a stream type value is a predetermined value, and the TEMI PES stream carries the location information;

or the adding component (102) is further configured to carry a specific media component TS stream, of which a value of an extension descriptor tag is a predetermined value, in the transport stream, wherein an adaptation field of the TS stream carries the location information;

wherein carrying an adaptation field descriptor, of which a tag field value is a predetermined value and a service type field value is a predetermined value, of a payload of the TEMI PES stream or an adaptation field of the specific media component TS stream in the transport stream, wherein the adaptation field descriptor is set as the location descriptor and the location descriptor comprises the location information;

wherein the location descriptor comprises at least one of the following: event stream scheme identifier field, event stream value field, event identifier field; wherein the event stream scheme identifier field is used for uniquely identifying an event stream scheme, the event stream value field is used for uniquely identifying an event stream in the event stream scheme and the event identifier field is used for uniquely identifying events of the event stream.

**Patentansprüche**

1. Verfahren zum Verarbeiten adaptiven Streamings, umfassend:

Erhalten einer Ortsinformation und Zeitinformation des adaptiven Streamings, getragen in einem Transportstrom, TS (S202);

Bestimmen mindestens eines Segments, im adaptiven Streaming, zur Zeitplanausrichtung mit dem Transportstrom gemäß der Ortsinformation (S204);

Bestimmen eines Präsenzzeitstempels, PTS, einer Medienpräsentationszeit von jedem des mindestens einen Segments im adaptiven Streaming in Bezug auf einen Zeitplan des Transportstroms gemäß der Zeitinformation (S206) ;

**dadurch gekennzeichnet, dass** das Erhalten der Ortsinformation des adaptiven Streamings, getragen in dem Transportstrom, umfasst: Parsen einer Programmplantabelle, PMT, aus dem Transportstrom, Bestimmen eines Paketidentifikators, PID, von dem ein Stromtyp ein vorbestimmter Wert ist, eines Stroms von Zeitplan- und Fremdmedieninformation, TEMI, und paketiertem Elementarstrom, PES; Filtern des TEMI-PES-Stroms gemäß dem PID; Extrahieren eines Ortsdeskriptors des adaptiven Streamings, getragen in dem TEMI-PES-Strom und Festlegen des Ortsdeskriptors als Ortsinformation;

oder das Erhalten der Ortsinformation des adaptiven Streamings, getragen in dem Transportstrom, umfasst: Erhalten eines spezifischen Medienkomponenten-TS-Stroms, von dem ein Wert eines Erweiterungsdeskriptor-Tags ein vorbestimmter Wert ist, aus dem Transportstrom;

Extrahieren eines Ortsdeskriptors des adaptiven Streamings, getragen in einem Adaptationsfeld des spezifischen Medienkomponenten-TS-Stroms und Festlegen des Ortsdeskriptors als Ortsinformation;

wobei das Extrahieren des Ortsdeskriptors des adaptiven Streamings umfasst: Extrahieren eines Adaptationsfelddeskriptors aus Nutzdaten des TEMI-PES-Stroms oder einem Adaptationsfeld des spezifischen Medienkomponenten-TS-Stroms und Festlegen des Adaptationsfelddeskriptors als Ortsdeskriptor, wobei ein Tag-Feldwert des Adaptationsfelddeskriptors ein vorbestimmter Wert ist und ein Servicetyp-Feldwert des Adaptationsfelddeskriptors ein vorbestimmter Wert ist;

wobei der Ortsdeskriptor mindestens eines aus Folgendem umfasst: Ereignisstromschema-Identifikatorfeld, Ereignisstrom-Wertfeld, Ereignisidentifikatorfeld; wobei das Ereignisstromschema-Identifikatorfeld ausschließlich zum Identifizieren eines Ereignisstromschemas verwendet wird, das Ereignisstrom-Wertfeld ausschließlich zum Identifizieren eines Ereignisstroms in dem Ereignisstromschema verwendet wird und das Ereignisidentifikatorfeld ausschließlich zum Identifizieren von Ereignissen des Ereignisstroms verwendet wird.

2. Verfahren nach Anspruch 1, wobei das Erhalten der Zeitinformation des adaptiven Streamings, getragen in dem Transportstrom, umfasst: Extrahieren eines Präsenzzeitstempels, PTS, enthalten in einem Erweiterungsheaderfeld des TEMI-PES-Stroms; Bestimmen der Zeitinformation des adaptiven Streamings gemäß einem Wert des PTS;

oder das Erhalten der Zeitinformation des adaptiven Streamings, getragen in dem Transportstrom, umfasst: Extrahieren eines PTS aus einem Erweiterungsheaderfeld eines PES, getragen in Nutzdaten des spezifischen Medienkomponenten-TS-Stroms; Bestimmen der Zeitinformation des adaptiven Streamings gemäß einem Wert des PTS;

oder das Erhalten der Zeitinformation des adaptiven Streamings, getragen in dem Transportstrom, umfasst: Erhalten des ersten TS-Stroms im Anschluss an den spezifischen Medienkomponenten-TS-Strom, wobei ein PID des ersten TS-Stroms der gleiche ist wie ein PID des spezifischen Medienkomponenten-TS-Stroms und ein Wert von payload_unit_start_indicator in einem TS-Headerfeld ein vorbestimmter Wert ist; Extrahieren eines PTS aus einem Erweiterungsheaderfeld eines PES, getragen in dem TS-Strom; Bestimmen der Zeitinformation des adaptiven Streamings gemäß einem Wert des PTS.

3. Verfahren nach Anspruch 1, wobei der Ortsdeskriptor weiter ein Feld eines Medienpräsentationsdeskriptions-Uniform-Resource-Locators, URL, umfasst, wobei ein Wert des Medienpräsentationsdeskriptions-URL-Felds verwendet wird, um einen Medienpräsentationsdeskriptions-URL des adaptiven Streamings zu bestimmen;

oder das Verfahren weiter umfasst: Extrahieren eines Zwangsneuladeidentifikators aus der Ortsinformation; wenn ein Wert des Zwangsneuladeidentifikators ein vorbestimmter Wert ist, Neuladen der Medienpräsentationsdeskription des adaptiven Streamings;

oder das Verfahren weiter umfasst: Extrahieren eines is_announcement-Flags aus der Ortsinformation des adaptiven Streamings; wenn ein Wert des is_announcement-Flags ein vorbestimmter Wert ist, Extrahieren eines time_before_activation-Felds und eines Zeitskalafelds aus der Ortsinformation.

4. Verfahren nach einem der Ansprüche 1 bis 3, wobei das Bestimmen des mindestens einen Segments, im adaptiven Streaming, zur Zeitplanausrichtung mit dem Transportstrom gemäß der Ortsinformation umfasst: Bestimmen einer Medienpräsentationsdeskription, MPD, des adaptiven Streamings entsprechend der Ortsinformation; Bestimmen des mindestens einen Segments zur Zeitplanausrichtung mit dem Transportstrom gemäß der Ortsinformation und der MPD;

wobei das Bestimmen des Präsenzzeitstempels der Medienpräsentationszeit von jedem des mindestens einen Segments im adaptiven Streaming in Bezug auf den Zeitplan des Transportstroms gemäß der Zeitinformation umfasst: Bestimmen des PTS einer Medienpräsentationszeit, in Bezug auf den Zeitplan des Transportstroms, von jedem des mindestens einen Segments zur Zeitplanausrichtung mit dem Transportstrom gemäß der Zeitinformation; Berechnen mindestens eines nachfolgenden Segments in einem Zeitraum, wo sich das mindestens eine Segment gemäß dem PTS des mindestens einen Segments zur Zeitplanausrichtung mit dem Transportstrom befindet.

5. Verfahren nach Anspruch 4, wobei das Bestimmen der MPD des adaptiven Streamings entsprechend der Ortsinformation umfasst: Extrahieren eines MPD-Deskriptors aus einer Programmplantabelle, PMT, des Transportstroms; und Erhalten eines URL der MPD entsprechend der Ortsinformation; oder Erhalten eines URL der MPD aus der Ortsinformation;

wobei das Bestimmen des mindestens einen Segments zur Zeitplanausrichtung mit dem Transportstrom gemäß der Ortsinformation und der MPD umfasst: Ersetzen eines $EventStream$-Identifikators eines @media-Attributs eines Segmentvorlagenelements der MPD durch einen Wert eines Ereignisstromschemafelds und einen Wert eines Ereignisstrom-Wertfelds, getragen in der Ortsinformation; Ersetzen eines $EventID$-Identifikators des @media-Attributs des Segmentvorlagenelements der MPD durch einen Wert eines Ereignisidentifikationsfelds, getragen in der Ortsinformation, um einen Identifikator eines URL von jedem des mindestens einen Segments im adaptiven Streaming zur Zeitplanausrichtung mit dem Transportstrom zu konstruieren;

oder das Bestimmen des mindestens einen Segments zur Zeitplanausrichtung mit dem Transportstrom gemäß der Ortsinformation und der MPD umfasst: Suchen und Bestimmen eines Zeitraumelements der MPD durch einen Wert eines Ereignisstromschemafelds und einen Wert eines Ereignisstrom-Wertfelds, getragen in der Ortsinformation; Konstruieren eines URL von jedem des mindestens einen Segments im adaptiven Streaming zur Zeitplanausrichtung mit dem Transportstrom gemäß Werten von @media- und @mediaRange-Attributen von URL-Elementen des mindestens einen Segments;

oder das Bestimmen des mindestens einen Segments zur Zeitplanausrichtung mit dem Transportstrom gemäß der Ortsinformation und der MPD umfasst: Suchen und Bestimmen eines Zeitraumelements der MPD durch einen Wert eines Ereignisstromschemafelds und einen Wert eines Ereignisstrom-Wertfelds, getragen in der Ortsinformation, und Suchen und Bestimmen eines Ereignisunterelements des Zeitraumelements durch einen Wert eines Ereignisidentifikationsfelds, getragen in der Ortsinformation; Konstruieren eines URL von jedem des mindestens einen Segments im adaptiven Streaming zur Zeitplanausrichtung mit dem Transportstrom gemäß Werten von @media- und @mediaRange-Attributen des Ereignisunterelements.

6. Verfahren nach Anspruch 5, wobei das Bestimmen des Präsenzzeitstempels von jedem des mindestens einen Segments im adaptiven Streaming in Bezug auf den Zeitplan des Transportstroms gemäß der Zeitinformation weiter umfasst:
Festlegen eines Werts eines PTS entsprechend einem Ortsdeskriptor des adaptiven Streamings als PTS der Medienpräsentationszeit von jedem des mindestens einen Segments in Bezug auf den Zeitplan des Transportstroms.

7. Verfahren zum Verarbeiten adaptiven Streamings, umfassend:

Hinzufügen mindestens einer Ortsinformation und Zeitinformation des adaptiven Streamings in einem Transportstrom, wobei die Ortsinformation verwendet wird zum Bestimmen mindestens eines Segments im adaptiven Streaming zur Zeitplanausrichtung mit dem Transportstrom, wobei die Zeitinformation verwendet wird zum Bestimmen eines Präsenzzeitstempels, PTS, einer Medienpräsentationszeit von jedem des mindestens einen Segments im adaptiven Streaming in Bezug auf einen Zeitplan des Transportstroms (S802); und Übertragen des Transportstroms an ein Benutzerendgerät (S804);
**dadurch gekennzeichnet, dass** das Hinzufügen einer Ortsinformation des adaptiven Streamings in dem Transportstrom umfasst: Hinzufügen eines Paketidentifikators, PID, in einer Programmplantabelle, PMT, des Transportstroms, wobei der PID verwendet wird zum Erhalten eines Stroms von Zeitplan- und Fremdmedieninformation, TEMI, und paketiertem Elementarstrom, PES, von dem ein Stromtypwert ein vorbestimmter Wert ist, und der TEMI-PES-Strom die Ortsinformation trägt;
oder das Hinzufügen einer Ortsinformation des adaptiven Streamings in dem Transportstrom umfasst: Tragen eines spezifischen Medienkomponenten-TS-Stroms, von dem ein Wert eines Erweiterungsdeskriptor-Tags ein vorbestimmter Wert ist, in dem Transportstrom, wobei ein Adaptationsfeld des TS-Stroms die Ortsinformation trägt;
wobei Tragen eines Adaptationsfelddeskriptors, von dem ein Tag-Feldwert ein vorbestimmter Wert ist und ein Servicetyp-Feldwert ein vorbestimmter Wert ist, von Nutzdaten des TEMI-PES-Stroms oder eines Adaptationsfelds des spezifischen Medienkomponenten-TS-Stroms in dem Transportstrom, wobei der Adaptationsfelddeskriptor als Ortsdeskriptor festgelegt ist und der Ortsdeskriptor die Ortsinformation umfasst;
wobei der Ortsdeskriptor mindestens eines aus Folgendem umfasst: Ereignisstromschema-Identifikatorfeld, Ereignisstrom-Wertfeld, Ereignisidentifikatorfeld; wobei das Ereignisstromschema-Identifikatorfeld ausschließlich zum Identifizieren eines Ereignisstromschemas verwendet wird, das Ereignisstrom-Wertfeld ausschließlich zum Identifizieren eines Ereignisstroms in dem Ereignisstromschema verwendet wird und das Ereignisidentifikatorfeld ausschließlich zum Identifizieren von Ereignissen des Ereignisstroms verwendet wird.

8. Verfahren nach Anspruch 7, wobei das Hinzufügen einer Zeitinformation des adaptiven Streamings in dem Transportstrom umfasst:

Tragen der Zeitinformation in einem Headererweiterungsfeld des TEMI-PES-Stroms;
oder das Hinzufügen einer Zeitinformation des adaptiven Streamings in dem Transportstrom umfasst: Tragen eines PTS in einem Erweiterungsheaderfeld eines PES von Nutzdaten des TS-Stroms, wobei ein Wert des PTS verwendet wird zum Bestimmen der Zeitinformation des adaptiven Streamings;
oder das Hinzufügen einer Zeitinformation des adaptiven Streamings in dem Transportstrom umfasst: Konfigurieren eines PID eines TS-Streams im Anschluss an einen spezifischen Medienkomponenten-TS-Strom, sodass er der gleiche ist wie ein PID des spezifischen Medienkomponenten-TS-Stroms, und eines Werts von payload_unit_start_indicator in einem TS-Headerfeld, sodass er ein vorbestimmter Wert ist; Tragen eines PTS in einem Erweiterungsheaderfeld eines PES von Nutzdaten des TS-Stroms, wobei ein Wert des PTS verwendet wird zum Bestimmen der Zeitinformation des adaptiven Streamings.

9. Verfahren nach Anspruch 7, wobei der Ortsdeskriptor weiter ein Feld eines Medienpräsentationsdeskriptions-Uniform-Resource-Locators, URL, umfasst, wobei ein Wert des Medienpräsentationsdeskriptions-URL-Felds verwendet wird, um einen Medienpräsentationsdeskriptions-URL des adaptiven Streamings zu bestimmen;
Tragen eines MPD-Deskriptors in einer Programmplantabelle, PMT, des Transportstroms, wobei der MPD-Deskriptor umfasst: das Medienpräsentationsdeskriptions-URL-Feld; oder Tragen des Medienpräsentationsdeskriptions-URL-Felds in der Ortsinformation.

10. Vorrichtung zum Verarbeiten adaptiven Streamings, umfassend:

eine Erhaltungskomponente (92) zum Erhalten einer Ortsinformation und Zeitinformation des adaptiven Streamings, getragen in einem Transportstrom, TS;
eine erste Bestimmungskomponente (94) zum Bestimmen mindestens eines Segments, im adaptiven Streaming, zur Zeitplanausrichtung mit dem Transportstrom gemäß der Ortsinformation;
eine zweite Bestimmungskomponente (96) zum Bestimmen eines Präsenzzeitstempels, PTS, einer Medienpräsentationszeit von jedem des mindestens einen Segments im adaptiven Streaming in Bezug auf einen Zeitplan des Transportstroms gemäß der Zeitinformation;
**dadurch gekennzeichnet, dass** die Erhaltungskomponente (92) weiter konfiguriert ist zum Parsen einer Programmplantabelle, PMT, aus dem Transportstrom, Bestimmen eines Paketidentifikators, PID, von dem ein Stromtyp ein vorbestimmter Wert ist, eines Stroms von Zeitplan- und Fremdmedieninformation, TEMI, und paketiertem Elementarstrom, PES; Filtern des TEMI-PES-Stroms gemäß dem PID; Extrahieren eines Ortsdeskriptors des adaptiven Streamings, getragen in dem TEMI-PES-Strom und Festlegen des Ortsdeskriptors als Ortsinformation;
oder die Erhaltungskomponente (92) weiter konfiguriert ist zum Erhalten eines spezifischen Medienkomponenten-TS-Stroms, von dem ein Wert eines Erweiterungsdeskriptor-Tags ein vorbestimmter Wert ist, aus dem Transportstrom; Extrahieren eines Ortsdeskriptors des adaptiven Streamings, getragen in einem Adaptationsfeld des spezifischen Medienkomponenten-TS-Stroms und Festlegen des Ortsdeskriptors als Ortsinformation;
wobei, dass die Erhaltungskomponente (92) konfiguriert ist zum Extrahieren des Ortsdeskriptors des adaptiven Streamings, die folgenden Schritte umfasst: Extrahieren eines Adaptationsfelddeskriptors aus Nutzdaten des TEMI-PES-Stroms oder einem Adaptationsfeld des spezifischen Medienkomponenten-TS-Stroms und Festlegen des Adaptationsfelddeskriptors als Ortsdeskriptor, wobei ein Tag-Feldwert des Adaptationsfelddeskriptors ein vorbestimmter Wert ist und ein Servicetyp-Feldwert des Adaptationsfelddeskriptors ein vorbestimmter Wert ist;
wobei der Ortsdeskriptor mindestens eines aus Folgendem umfasst: Ereignisstromschema-Identifikatorfeld, Ereignisstrom-Wertfeld, Ereignisidentifikatorfeld; wobei das Ereignisstromschema-Identifikatorfeld ausschließlich zum Identifizieren eines Ereignisstromschemas verwendet wird, das Ereignisstrom-Wertfeld ausschließlich zum Identifizieren eines Ereignisstroms in dem Ereignisstromschema verwendet wird und das Ereignisidentifikatorfeld ausschließlich zum Identifizieren von Ereignissen des Ereignisstroms verwendet wird.

11. Vorrichtung zum Verarbeiten adaptiven Streamings, umfassend:

eine Hinzufügungskomponente (102) zum Hinzufügen mindestens einer Ortsinformation und Zeitinformation des adaptiven Streamings in einem Transportstrom, wobei die Ortsinformation verwendet wird zum Bestimmen mindestens eines Segments im adaptiven Streaming zur Zeitplanausrichtung mit dem Transportstrom, wobei die Zeitinformation verwendet wird zum Bestimmen eines Präsenzzeitstempels, PTS, einer Medienpräsentationszeit von jedem des mindestens einen Segments im adaptiven Streaming in Bezug auf einen Zeitplan des Transportstroms;

eine Übertragungskomponente (104) zum Übertragen des Transportstroms an ein Benutzerendgerät;

**dadurch gekennzeichnet, dass** die Hinzufügungskomponente (102) weiter konfiguriert ist zum Hinzufügen eines Paketidentifikators, PID, in einer Programmplantabelle, PMT, des Transportstroms, wobei der PID verwendet wird zum Erhalten eines Stroms von Zeitplan- und Fremdmedieninformation, TEMI, und paketiertem Elementarstrom, PES, von dem ein Stromtypwert ein vorbestimmter Wert ist, und der TEMI-PES-Strom die Ortsinformation trägt;

oder die Hinzufügungskomponente (102) weiter konfiguriert ist zum Tragen eines spezifischen Medienkomponenten-TS-Stroms, von dem ein Wert eines Erweiterungsdeskriptor-Tags ein vorbestimmter Wert ist, in dem Transportstrom, wobei ein Adaptationsfeld des TS-Stroms die Ortsinformation trägt;

wobei Tragen eines Adaptationsfelddeskriptors, von dem ein Tag-Feldwert ein vorbestimmter Wert ist und ein Servicetyp-Feldwert ein vorbestimmter Wert ist, von Nutzdaten des TEMI-PES-Stroms oder eines Adaptationsfelds des spezifischen Medienkomponenten-TS-Stroms in dem Transportstrom, wobei der Adaptationsfelddeskriptor als Ortsdeskriptor festgelegt ist und der Ortsdeskriptor die Ortsinformation umfasst;

wobei der Ortsdeskriptor mindestens eines aus Folgendem umfasst: Ereignisstromschema-Identifikatorfeld, Ereignisstrom-Wertfeld, Ereignisidentifikatorfeld; wobei das Ereignisstromschema-Identifikatorfeld ausschließlich zum Identifizieren eines Ereignisstromschemas verwendet wird, das Ereignisstrom-Wertfeld ausschließlich zum Identifizieren eines Ereignisstroms in dem Ereignisstromschema verwendet wird und das Ereignisidentifikatorfeld ausschließlich zum Identifizieren von Ereignissen des Ereignisstroms verwendet wird.

## Revendications

1. Procédé de traitement de diffusion en flux adaptative, comprenant :

l'obtention d'informations d'emplacement et d'informations de temps de la diffusion en flux adaptative transportée dans un flux de transport, TS (S202) ;

la détermination d'au moins un segment, dans la diffusion en flux adaptative, pour un alignement de ligne de temps avec le flux de transport en fonction des informations d'emplacement (S204) ;

la détermination d'un horodatage de présence, PTS, d'un temps de présentation multimédia de chacun de l'au moins un segment dans la diffusion en flux adaptative par rapport à une ligne de temps du flux de transport en fonction des informations de temps (S206) ;

**caractérisé en ce que** l'obtention des informations d'emplacement de la diffusion en flux adaptative transportée dans le flux de transport comprend : l'analyse syntaxique d'une table de carte de programme, PMT, à partir du flux de transport, la détermination d'un identificateur de paquet, PID, dont un type de flux est une valeur prédéterminée, d'un flux de flux élémentaire de paquets, PES, d'informations multimédias externes et de ligne de temps, TEMI ; le filtrage du flux TEMI PES en fonction du PID ; l'extraction d'un descripteur d'emplacement de la diffusion en flux adaptative transportée dans le flux TEMI PES et la définition du descripteur d'emplacement comme les informations d'emplacement ;

ou l'obtention des informations d'emplacement de la diffusion en flux adaptative transportée dans le flux de transport comprend : l'obtention d'un flux TS de composant multimédia spécifique, dont une valeur d'une étiquette de descripteur d'extension est une valeur prédéterminée, à partir du flux de transport ; l'extraction d'un descripteur d'emplacement de la diffusion en flux adaptative transporté dans un champ d'adaptation du flux TS de composant multimédia spécifique et la définition du descripteur d'emplacement comme les informations d'emplacement ;

dans lequel l'extraction du descripteur d'emplacement de la diffusion en flux adaptative comprend : l'extraction d'un descripteur de champ d'adaptation à partir d'une charge utile du flux TEMI PES ou d'un champ d'adaptation du flux TS de composant multimédia spécifique et la définition du descripteur de champ d'adaptation comme le descripteur d'emplacement, dans lequel une valeur de champ d'étiquette du descripteur de champ d'adaptation est une valeur prédéterminée et une valeur de champ de type de service du descripteur de champ d'adaptation est une valeur prédéterminée ;

dans lequel le descripteur d'emplacement comprend au moins un parmi ce qui suit : un champ d'identificateur de schéma de flux d'événements, un champ de valeur de flux d'événements, un champ d'identificateur d'événements ; dans lequel le champ d'identificateur de schéma de flux d'événements est utilisé pour identifier de manière unique un schéma de flux d'événements, le champ de valeur de flux d'événements est utilisé pour identifier de manière unique un flux d'événements dans le schéma de flux d'événements et le champ d'identificateur d'événement est utilisé pour identifier de manière unique des événements du flux d'événements.

**2.** Procédé selon la revendication 1, dans lequel l'obtention des informations de temps de la diffusion en flux adaptative transportée dans le flux de transport comprend : l'extraction d'un horodatage de présence, PTS, contenu dans un champ d'en-tête d'extension du flux TEMI PES ; la détermination des informations de temps de la diffusion en flux adaptative en fonction d'une valeur du PTS ;

ou l'obtention des informations de temps de la diffusion en flux adaptative transportée dans le flux de transport comprend : l'extraction d'un PTS à partir d'un champ d'en-tête d'extension d'un PES transporté dans une charge utile du flux TS de composant multimédia spécifique ; la détermination des informations de temps de la diffusion en flux adaptative en fonction d'une valeur du PTS ;

ou l'obtention des informations de temps de la diffusion en flux adaptative transportée dans le flux de transport comprend : l'obtention du premier flux TS subséquent au flux TS de composant multimédia spécifique, dans lequel un PID du premier flux TS est le même qu'un PID du flux TS de composant multimédia spécifique et une valeur de payload_unit_start_indicator dans un champ d'en-tête TS est une valeur prédéterminée ; l'extraction d'un PTS à partir d'un champ d'en-tête d'extension d'un PES transporté dans le flux TS ; la détermination des informations de temps de la diffusion en flux adaptative en fonction d'une valeur du PTS.

**3.** Procédé selon la revendication 1, dans lequel le descripteur d'emplacement comprend en outre un champ de localisateur uniforme de ressource, URL, de description de présentation multimédia, dans lequel une valeur du champ URL de description de présentation multimédia est utilisée pour déterminer un URL de description de présentation multimédia de la diffusion en flux adaptative ;

ou le procédé comprend en outre : l'extraction d'un identificateur de rechargement de force à partir des informations d'emplacement ; quand une valeur de l'identificateur de rechargement de force est une valeur prédéterminée, le rechargement de la description de présentation multimédia de la diffusion en flux adaptative ;

ou le procédé comprend en outre : l'extraction d'un indicateur is_announcement à partir des informations d'emplacement de la diffusion en flux adaptative ; quand une valeur de l'indicateur is_announcement est une valeur prédéterminée, l'extraction d'un champ time_before_activation et d'un champ d'échelle de temps à partir des informations d'emplacement.

**4.** Procédé selon l'une quelconque des revendications 1 à 3,
dans lequel la détermination de l'au moins un segment, dans la diffusion en flux adaptative, pour un alignement de ligne de temps avec le flux de transport en fonction des informations d'emplacement comprend : la détermination d'une description de présentation multimédia, MPD, de la diffusion en flux adaptative correspondant aux informations d'emplacement ; la détermination de l'au moins un segment pour un alignement de ligne de temps avec le flux de transport en fonction des informations d'emplacement et de la MPD ;
dans lequel la détermination de l'horodatage de présence du temps de présentation multimédia de chacun de l'au moins un segment dans la diffusion en flux adaptative par rapport à la ligne de temps du flux de transport en fonction des informations d'emplacement comprend : la détermination du PTS du temps de présentation multimédia, par rapport à la ligne de temps du flux de transport, de chacun de l'au moins un segment pour un alignement de ligne de temps avec le flux de transport en fonction des informations de temps ; le calcul d'au moins un segment subséquent dans une période où l'au moins un segment est situé en fonction du PTS de l'au moins un segment pour un alignement de ligne de temps avec le flux de transport.

**5.** Procédé selon la revendication 4, dans lequel la détermination de la MPD de la diffusion en flux adaptative correspondant aux informations d'emplacement comprend : l'extraction d'un descripteur MPD à partir d'une table de carte de programme, PMT, du flux de transport ; et l'obtention d'un URL de la MPD correspondant aux informations d'emplacement ; ou l'obtention d'un URL de la MPD à partir des informations d'emplacement ;
dans lequel la détermination de l'au moins un segment pour un alignement de ligne de temps avec le flux de transport en fonction des informations d'emplacement et de la MPD comprend : le remplacement d'un identificateur $EventStream$ d'un attribut @media d'élément de modèle de segment de la MPD par une valeur d'un champ de schéma de flux d'événements et une valeur d'un champ de valeur de flux d'événements transportés dans les informations d'emplacement ; le remplacement d'un identificateur $EventID$ de l'attribut @media d'élément de modèle de segment de la MPD par une valeur d'un champ d'identification d'événement transporté dans les informations d'emplacement, pour construire un identificateur d'un URL de chacun de l'au moins un segment, dans la diffusion en flux adaptative, pour un alignement de ligne de temps avec le flux de transport ;
ou la détermination de l'au moins un segment pour un alignement de ligne de temps avec le flux de transport en fonction des informations d'emplacement et de la MPD comprend : la recherche et la détermination d'un élément de période de la MPD par une valeur d'un champ de schéma de flux d'événements et une valeur d'un champ de valeur de flux d'événements transportés dans les informations d'emplacement ; la construction d'un URL de chacun de l'au moins un segment, dans la diffusion en flux adaptative, pour un alignement de ligne de temps avec le flux de transport en fonction de valeurs d'attributs @media et @mediaRange d'éléments d'URL de l'au moins un segment ;

ou la détermination de l'au moins un segment pour un alignement de ligne de temps avec le flux de transport en fonction des informations d'emplacement et de la MPD comprend : la recherche et la détermination d'un élément de période de la MPD par une valeur d'un champ de schéma de flux d'événements et une valeur d'un champ de valeur de flux d'événements transportés dans les informations d'emplacement, et la recherche et la détermination d'un sous-élément d'événement de l'élément de période par une valeur d'un champ d'identification d'événement transporté dans les informations d'emplacement ; la construction d'un URL de chacun de l'au moins un segment, dans la diffusion en flux adaptative, pour un alignement de ligne de temps avec le flux de transport en fonction de valeurs d'attributs @media et @mediaRange du sous-élément d'événement.

6. Procédé selon la revendication 5, dans lequel la détermination de l'horodatage de présence du temps de présentation multimédia de chacun de l'au moins un segment dans la diffusion en flux adaptative par rapport à la ligne de temps du flux de transport en fonction des informations de temps comprend en outre :

la définition d'une valeur d'un PTS correspondant à un descripteur d'emplacement de la diffusion en flux adaptative comme le PTS du temps de présentation multimédia de chacun de l'au moins un segment par rapport à la ligne de temps du flux de transport.

7. Procédé de traitement de diffusion en flux adaptative, comprenant :

l'ajout d'au moins une parmi des informations d'emplacement et des informations de temps de la diffusion en flux adaptative dans un flux de transport, dans lequel les informations d'emplacement sont utilisées pour la détermination d'au moins un segment, dans la diffusion en flux adaptative, pour un alignement de ligne de temps avec le flux de transport, les informations de temps sont utilisées pour la détermination d'un horodatage de présence, PTS, d'un temps de présentation multimédia de chacun de l'au moins un segment dans la diffusion en flux adaptative par rapport à une ligne de temps du flux de transport (S802) ; et

la transmission du flux de transport à un terminal utilisateur (S804) ;

**caractérisé en ce que** l'ajout d'informations d'emplacement de la diffusion en flux adaptative dans le flux de transport comprend : l'ajout d'un identificateur de paquet, PID, dans une table de carte de programme, PMT, du flux de transport, dans lequel le PID est utilisé pour obtenir un flux de flux élémentaire de paquets, PES, d'informations multimédias externes et de ligne de temps, TEMI, dont une valeur de type de flux est une valeur prédéterminée, et le flux TEMI PES transporte les informations d'emplacement ;

ou l'ajout d'informations d'emplacement de la diffusion en flux adaptative dans le flux de transport comprend : le transport d'un flux TS de composant multimédia spécifique, dont une valeur d'une étiquette de descripteur d'extension est une valeur prédéterminée, dans le flux de transport, dans lequel un champ d'adaptation du flux TS transporte les informations d'emplacement ;

dans lequel le transport d'un descripteur de champ d'adaptation, dont une valeur de champ d'étiquette est une valeur prédéterminée et une valeur de champ de type de service est une valeur prédéterminée, d'une charge utile du flux TEMI PES ou d'un champ d'adaptation du flux TS de composant multimédia spécifique dans le flux de transport, dans lequel le descripteur de champ d'adaptation est défini comme le descripteur d'emplacement et le descripteur d'emplacement comprend les informations d'emplacement ;

dans lequel le descripteur d'emplacement comprend au moins un parmi ce qui suit : un champ d'identificateur de schéma de flux d'événements, un champ de valeur de flux d'événements, un champ d'identificateur d'événements ; dans lequel le champ d'identificateur de schéma de flux d'événements est utilisé pour identifier de manière unique un schéma de flux d'événements, le champ de valeur de flux d'événements est utilisé pour identifier de manière unique un flux d'événements dans le schéma de flux d'événements et le champ d'identificateur d'événement est utilisé pour identifier de manière unique des événements du flux d'événements.

8. Procédé selon la revendication 7, dans lequel l'ajout des informations de temps de la diffusion en flux adaptative dans le flux de transport comprend :

le transport des informations de temps dans un champ d'extension d'en-tête du flux TEMI PES ;

ou l'ajout d'informations de temps de la diffusion en flux adaptative dans le flux de transport comprend : le transport d'un PTS dans un champ d'en-tête d'extension d'un PES d'une charge utile du flux TS, dans lequel une valeur du PTS est utilisée pour déterminer les informations de temps de la diffusion en flux adaptative ;

ou l'ajout d'informations de temps de la diffusion en flux adaptative dans le flux de transport comprend :

la configuration d'un PID d'un flux TS subséquent à un flux TS de composant multimédia spécifique pour qu'il soit le même qu'un PID du flux TS de composant multimédia spécifique et d'une valeur de payload_unit_start_indicator dans un champ d'en-tête TS pour qu'elle soit une valeur prédéterminée ; le transport d'un PTS dans un champ d'en-tête d'extension d'un PES d'une charge utile du flux TS, dans lequel une valeur du PTS est utilisée pour déterminer les informations de temps de la diffusion en flux adaptative.

9. Procédé selon la revendication 7, dans lequel le descripteur d'emplacement comprend en outre un champ de localisateur uniforme de ressource, URL, de description de présentation multimédia, dans lequel une valeur du champ URL de description de présentation multimédia est utilisée pour déterminer un URL de description de présentation multimédia de la diffusion en flux adaptative ;
le transport d'un descripteur MPD dans une table de carte de programme, PMT, du flux de transport, dans lequel le descripteur MPD comprend : le champ d'URL de description de présentation multimédia ; ou le transport du champ d'URL de description de présentation multimédia dans les informations d'emplacement.

10. Dispositif de traitement de diffusion en flux adaptative, comprenant :

un composant d'obtention (92) pour obtenir des informations d'emplacement et des informations de temps de la diffusion en flux adaptative transportée dans un flux de transport, TS ;
un premier composant de détermination (94) pour déterminer au moins un segment, dans la diffusion en flux adaptative, pour un alignement de ligne de temps avec le flux de transport en fonction des informations d'emplacement ;
un second composant de détermination (96) pour déterminer un horodatage de présence, PTS, d'un temps de présentation multimédia de chacun de l'au moins un segment dans la diffusion en flux adaptative par rapport à une ligne de temps du flux de transport en fonction des informations de temps ;
**caractérisé en ce que** le composant d'obtention (92) est configuré en outre pour analyser syntaxiquement une table de carte de programme, PMT, à partir du flux de transport, déterminer un identificateur de paquet, PID, dont un type de flux est une valeur prédéterminée, d'un flux de flux élémentaire de paquets, PES, d'informations multimédias externes et de ligne de temps, TEMI ; filtrer le flux TEMI PES en fonction du PID ; extraire un descripteur d'emplacement de la diffusion en flux adaptative transportée dans le flux TEMI PES et la définition du descripteur d'emplacement comme les informations d'emplacement ;
ou le composant d'obtention (92) est configuré en outre pour obtenir un flux TS de composant multimédia spécifique, dont une valeur d'une étiquette de descripteur d'extension est une valeur prédéterminée, à partir du flux de transport ; extraire un descripteur d'emplacement de la diffusion en flux adaptative transporté dans un champ d'adaptation du flux TS de composant multimédia spécifique et la définition du descripteur d'emplacement comme les informations d'emplacement ;
dans lequel le fait que le composant d'obtention (92) est configuré pour extraire le descripteur d'emplacement de la diffusion en flux adaptative comprend les étapes suivantes : l'extraction d'un descripteur de champ d'adaptation à partir d'une charge utile du flux TEMI PES ou d'un champ d'adaptation du flux TS de composant multimédia spécifique et la définition du descripteur de champ d'adaptation comme le descripteur d'emplacement, dans lequel une valeur de champ d'étiquette du descripteur de champ d'adaptation est une valeur prédéterminée et une valeur de champ de type de service du descripteur de champ d'adaptation est une valeur prédéterminée ;
dans lequel le descripteur d'emplacement comprend au moins un parmi ce qui suit : un champ d'identificateur de schéma de flux d'événements, un champ de valeur de flux d'événements, un champ d'identificateur d'événements ; dans lequel le champ d'identificateur de schéma de flux d'événements est utilisé pour identifier de manière unique un schéma de flux d'événements, le champ de valeur de flux d'événements est utilisé pour identifier de manière unique un flux d'événements dans le schéma de flux d'événements et le champ d'identificateur d'événement est utilisé pour identifier de manière unique des événements du flux d'événements.

11. Dispositif de traitement de diffusion en flux adaptative, comprenant :

un composant d'ajout (102) pour ajouter au moins une parmi des informations d'emplacement et des informations de temps de la diffusion en flux adaptative dans un flux de transport, dans lequel les informations d'emplacement sont utilisées pour la détermination d'au moins un segment, dans la diffusion en flux adaptative, pour un alignement de ligne de temps avec le flux de transport, les informations de temps sont utilisées pour la détermination d'un horodatage de présence, PTS, d'un temps de présentation multimédia de chacun de l'au moins un segment dans la diffusion en flux adaptative par rapport à une ligne de temps du flux de transport ;
un composant de transmission (104) pour transmettre le flux de transport à un terminal utilisateur ;
**caractérisé en ce que** le composant d'ajout (102) est configuré en outre pour ajouter un identificateur de paquet, PID, dans une table de carte de programme, PMT, du flux de transport, dans lequel le PID est utilisé pour obtenir un flux de flux élémentaire de paquets, PES, d'informations multimédias externes et de ligne de temps, TEMI, dont une valeur de type de flux est une valeur prédéterminée, et le flux TEMI PES transporte les informations d'emplacement ;

ou le composant d'ajout (102) est configuré en outre pour transporter un flux TS de composant multimédia spécifique, dont une valeur d'une étiquette de descripteur d'extension est une valeur prédéterminée, dans le flux de transport, dans lequel un champ d'adaptation du flux TS transporte les informations d'emplacement ;

dans lequel le transport d'un descripteur de champ d'adaptation, dont une valeur de champ d'étiquette est une valeur prédéterminée et une valeur de champ de type de service est une valeur prédéterminée, d'une charge utile du flux TEMI PES ou d'un champ d'adaptation du flux TS de composant multimédia spécifique dans le flux de transport, dans lequel le descripteur de champ d'adaptation est défini comme le descripteur d'emplacement et le descripteur d'emplacement comprend les informations d'emplacement ;

dans lequel le descripteur d'emplacement comprend au moins un parmi ce qui suit : un champ d'identificateur de schéma de flux d'événements, un champ de valeur de flux d'événements, un champ d'identificateur d'événements ; dans lequel le champ d'identificateur de schéma de flux d'événements est utilisé pour identifier de manière unique un schéma de flux d'événements, le champ de valeur de flux d'événements est utilisé pour identifier de manière unique un flux d'événements dans le schéma de flux d'événements et le champ d'identificateur d'événement est utilisé pour identifier de manière unique des événements du flux d'événements.

broadcast content
source 100

MPEG-2 TS
code stream

| ... | PAT | ... | PMT (mpd_url) | ... | Video PES ($PTS_i$) | ... | Audio PES ($PTS_i$) | ... | TEMI PES ($PTS_i$ + AF Descriptor) | ... |

Terminal 400

First terminal
410

MPD

```
<MPD>
  <Period id=···>
    <EventStream schemeIdUri=···, value=··· >
      <Event id=···/>
  </Period>
</MPD>
```

MPD server
200

Second terminal
420

streaming server
300

dynamic adaptive
streaming

| ... | $segment_j$ | ... | $segment_2$ | $segment_1$ |

**Fig. 1**

obtain location information and time information of the adaptive streaming carried in a transport stream — S202

determine at least one segment, in the adaptive streaming, for timeline alignment with the transport stream according to the location information — S204

determine a presence time stamp of media presentation time of each of the at least one segment in the adaptive streaming relative to a timeline of the transport stream according to the time information — S206

**Fig. 2**

TS

| TS Header | Adaptation Field | TS Payload |
|---|---|---|

| ... | PID | ... |

TEMI PES

| PES Header | Adaptation Field | PES Payload |
|---|---|---|

| ... | StreamID = private_stream_1 | ... |

| ... | PTS | ... |

TEMI PES
TEMI_AU

AF Descriptor
(Location Descriptor)

**Fig. 3**

TS

| TS Header | Adaptation Field | TS Payload | ... |
|---|---|---|---|

TS

| Header | Adaptation Field | Payload |
|---|---|---|

| ... | AF Descriptor | ... |

PES

| PES  Header | Adaptation Field | PES Payload |
|---|---|---|

PES

| PES Header | Adaptation Field | PES Payload |
|---|---|---|

| ... | PTS | ... |

| ... | PTS | ... |

**Fig. 4**

```
<MPD>
  ...
  <Period id="1">
   <SegmentTemplate
      media="$RepresentationID$_$Number%05d$.ts"
      media="$EventStream$_$EventID%05d$.ts"
      index="$RepresentationID$.sidx"
      initialization="$RepresentationID$-init.ts"
      bitstreamSwitching="$RepresentationID$-bssw.ts" duration="4"/>
   ...
   <EventStream schemeIdUri="urn:uuid:XYZY" timescale="1000" value="ad">
   ...
  </Period>
</MPD>
```

| |
|---|
| seg101.ts |
| ...  ... |

| |
|---|
| seg105.ts |
| ...  ... |

**Fig. 5**

```
<MPD>
 ...
 <Period id="1">
  <SegmentList duration="10">
   <SegmentURL eventID=1 media="seg201.mp4"/>

   <SegmentURL eventID=2 media="seg205.mp4"/>

   ...
  </SegmentList>

   ...
  <EventStream schemeIdUri="urn:uuid:XYZY" timescale="1000" value="ad">

   ...
 </Period>
</MPD>
```

| seg201.mp4 |
|:----------:|
| ... ... |
| seg205.mp4 |
| ... ... |

```
<MPD>
 ...
 <Period id="1">
  <SegmentList duration="10">
   <SegmentURL eventID=1 media="seg201.mp4"mediaRange="0-499"/>

   <SegmentURL eventID=2 media="seg205.mp4"mediaRange="500-999"/>

   ...
  </SegmentList>

   ...
  <EventStream schemeIdUri="urn:uuid:XYZY" timescale="1000" value="ad">

   ...
 </Period>
</MPD>
```

| seg201.mp4 | ... ... | seg205.mp4 | ... ... |
|:----------:|:-------:|:----------:|:-------:|

**Fig. 6**

```
<MPD>
  ...
  <Period id="1">
    <EventStream schemeIdUri="urn:uuid:XYZY" timescale="1000" value="ad">
    <Event id=1 media="seg301.mp4"/>
    <Event id=2 media="seg305.mp4"/>
    ...
  </Period>
</MPD>
```

| seg301.mp4 |
| ... ... |
| seg305.mp4 |
| ... ... |

```
<MPD>
  ...
  <Period id="1">
    <EventStream schemeIdUri="urn:uuid:XYZY" timescale="1000" value="ad">
    <Event id=1 media="seg301.mp4" mediaRange="0-499"/>
    <Event id=2 media="seg305.mp4 mediaRange="500-999""/>
    ...
  </Period>
</MPD>
```

| seg301.mp4 | ... ... | seg305.mp4 | ... ... |

**Fig. 7**

Add at least one of location information and time information of the adaptive streaming in a transport stream, wherein the location information is used for determining at least one segment, in the adaptive streaming, for timeline alignment with the transport stream, the time information is used for determining a presence time stamp of media presentation time of each of the at least one segment in the adaptive streaming relative to a timeline of the transport stream

S802

Transmit the transport stream to a user terminal

S804

**Fig. 8**

Obtaining component 92

First determining component 94

Second determining component 96

**Fig. 9**

Adding component 102

Transmitting component 104

**Fig. 10**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014171718 A1
- EP 2988519 A1

**Non-patent literature cited in the description**

- **JEAN LE FEUVRE et al.** Extensions for Hybrid Delivery using MPEG-2 TS and DASH. *102. MPEG MEETING,* 17 October 2012
- **YOUNGKWON LIM.** *MPEG systems technologies for advanced media synchronization,* 23 October 2014, 1-15
- A DVB/IP streaming testbed for hybrid digital media content synchronization. **CHRISTOPHER KOHNEN et al.** CONSUMER ELECTRONICS - BERLIN (ICCE-BERLIN), 2012 IEEE INTERNATIONAL CONFERENCE ON. IEEE, 03 September 2012, 136-140
- **DVB ORGANIZATION.** 29n141652.doc. *DVB, DIGITAL VIDEO BROADCASTING,* 23 April 2014